# EUROPEAN PATENT SPECIFICATION

(11) **EP 2 124 444 B1**
(45) Date of publication and mention of the grant of the patent: **03.04.2013**
(21) Application number: 07860088.9
(22) Date of filing: 25.12.2007
(51) Int. Cl.: H04N 7/173, H05B 37/02

(54) **TRANSMISSION DEVICE, VIEW ENVIRONMENT CONTROL DEVICE, AND VIEW ENVIRONMENT CONTROL SYSTEM**
ÜBERTRAGUNGSEINRICHTUNG, ANSICHTSUMGEBUNGSSTEUEREINRICHTUNG UND ANSICHTSUMGEBUNGSSTEUERSYSTEM
DISPOSITIF DE TRANSMISSION, DISPOSITIF DE COMMANDE D'ENVIRONNEMENT DE VISUALISATION ET SYSTÈME DE COMMANDE D'ENVIRONNEMENT DE VISUALISATION

(30) Priority: 28.12.2006 JP 2006353877
(43) Date of publication of application: 25.11.2009
(73) Proprietor: Sharp Kabushiki Kaisha, Osaka-shi, Osaka 545-8522 (JP)
(72) Inventor: IWANAMI, Takuya, Osaka-shi, Osaka 545-8522 (JP); YOSHIDA, Yasuhiro, Osaka-shi, Osaka 545-8522 (JP); OHKI, Yasuhiro, Osaka-shi, Osaka 545-8522 (JP); YOSHII, Takashi, Osaka-shi, Osaka 545-8522 (JP); ISHIKAWA, Manabu, Osaka-shi, Osaka 545-8522 (JP)
(74) Representative: Müller - Hoffmann & Partner
(86) International application number: PCT/JP2007/074859
(87) International publication number: WO 2008/084677

(56) References cited:
- EP-A1- 2 018 062
- WO-A2-2004/006578
- JP-A- 2000 173 783
- JP-A- 2001 343 900
- JP-A- 2003 086 384
- US-A1- 2004 174 326
- US-A1- 2005 275 626
- US-B1- 6 611 297

## Description

### Technical Field

The present invention relates to: a transmission device for transmitting, to a viewer-side terminal, reference data relating to a position of an illumination device in a virtual audio-visual environment space; an audio-visual environment control device for generating illumination control data with use of reference data sent from a transmitting-side terminal, the illumination control data being used for controlling illumination light of an illumination device provided in an actual audio-visual environment space; and an audio-visual environment control system including the audio-visual environment control device.

### Background Art

In these years, electronic technologies for images and sounds have been improved rapidly. This leads to enlargement of displays, widening of viewing angles, resolution enhancement, and improvement of surround sound system. This allows users to enjoy realistic images and sounds. For example, home theater systems, which are recently used more and more widely, include a combination of a large display or screen and multiple-channel audio/acoustic technique, thereby providing systems for achieving a highly realistic atmosphere.

Moreover, especially recently, systems including a combination of various media are under considerable development for providing a more realistic atmosphere for users. Examples of such systems that are proposed encompass: a system for viewing wide angle images not by a single display device only, but by a combination of a plurality of displays; and a system in which images on a display and illumination light of an illumination device are linked to operate together.

In particular, the technique including linked operation of the display and the illumination device achieves a highly realistic atmosphere without a large display, thereby reducing restrictions of costs and installation space, for example. These features attract a lot of attention with great expectations.

According to the technique, the illumination light of the plurality of illumination devices installed in a viewer's room (audio-visual environment space) is controlled in color and brightness according to the images displayed by the display. This provides the viewer with such a sense and an effect that as if the viewer exists in the image space displayed by the display. For example, Patent Literature 1 discloses such a technique in which images displayed by a display and illumination light of an illumination deice are linked to operate together.

The technique disclosed in Patent Literature 1 is aimed to provide a highly realistic atmosphere. Patent Literature 1 describes a method for generating illumination control data for a plurality of illumination devices according to features (representative color and average brightness) of image data, in an illumination system for controlling the plurality of illumination devices linked to operate with images to be displayed. More specifically, Patent Literature 1 discloses that a display region for detecting the features of the image data varies according to the predetermined installation position of each illumination devices.

Moreover, Patent Literature 1 discloses that the control data may not only be calculated from the features of the image data, but also be delivered either solely or in combination with the image data via, e.g., the Internet or via carrier waves.

In US 2005/275626 A1, methods and systems are disclosed for providing audio/visual control systems that control lightening systems, including advanced control of lightening effects in real time for video jockeys and similar professionals.

In US 2004/174326 A1, an illumination service providing method capable of realizing an entertainment feature is disclosed. By using an illumination apparatus having a plurality of pixels, each of which can be controlled independently, and a computer, an illumination service is provided for illuminating a predetermined space in a desired form. This method includes a step where the computer receives an illumination service order, steps where the computer acquires illumination control data for controlling the plurality of pixels according to the illumination surface order, and a step where the computer provides the illumination control data.

In EP 2 018 062 A1, which document forms part of the prior art according to Art. 54(3) EPC, an audio visual environment control system capable of realizing optimal audio-visual environment illumination control in accordance with the illumination condition upon shooting a display image is disclosed. A data transmission device comprises a data multiplexing portion for multiplexing the shooting illumination data indicating the illuminating condition at the shooting of a scene of video data, and a transmitting portion for modulating and transmitting the video data on which the shooting illumination data is multiplexed. A data receiving apparatus which receives the data is also disclosed, the data receiving apparatus comprising a data separating portion for separating the shooting illumination data from the video data, a CPU for controlling the illumination light of an illuminating device in accordance with the illumination data, and an illumination control data generating portion.

### Citation List

### Patent Literature 1

Japanese Patent Application Publication, Tokukai, No. 2001-343900 A (Publication Date: December 14, 2001)

### Summary of Invention

As described above, Patent Literature 1 describes that the illumination control data may be delivered externally via the Internet, etc. However, the illumination control data corresponds only to a predetermined illumination device layout (i.e., installation position of the illumination device in a virtual audio-visual environment space). Accordingly, an illumination device installed in an actual audio-visual environment space which varies according to viewers cannot be controlled properly. That is, the conventional technique has a problem that the conventional technique does not have any configuration for converting illumination control data delivered from an external device into illumination data in accordance with installation position/number of an illumination device in an actual audio-visual environment space, whereby an illumination control according to actual audio-visual environments which varies according to viewers cannot be performed properly.

The present invention is achieved in consideration of the problem of the conventional technique. An object of the present invention is to provide: a data transmission device which achieves appropriate illumination control according to an actual audio-visual environment with use of illumination control data corresponding to a virtual audio-visual environment sent from an external device; an audio-visual environment control device; and an audio-visual environment control system.

The above objects are solved by the claimed matter according to the independent claims.

In the present invention, reference data relating to a position of an illumination device in a virtual audio-visual environment space is sent to a viewer's side. The viewer's side receives the reference data, and this makes it possible to convert illumination control data for controlling the illumination device in the virtual audio-visual environment space into illumination control data for controlling an illumination device in an actual audio-visual environment space. This leads to appropriate illumination control according to the actual audio-visual environment of the viewer.

### Brief Description of Drawings

Fig. 1

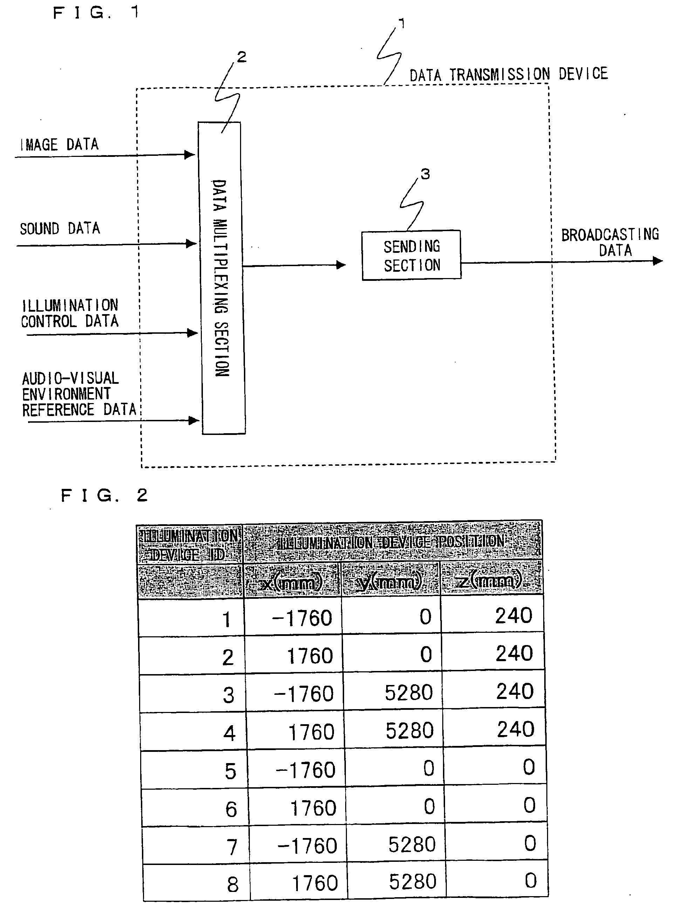

   Fig. 1 is a block diagram illustrating a schematic structure of an image transmission device in a first embodiment of the present invention.
Fig. 2
   Fig. 2 is an explanatory view illustrating an example of audio-visual environment reference data.
Fig. 3

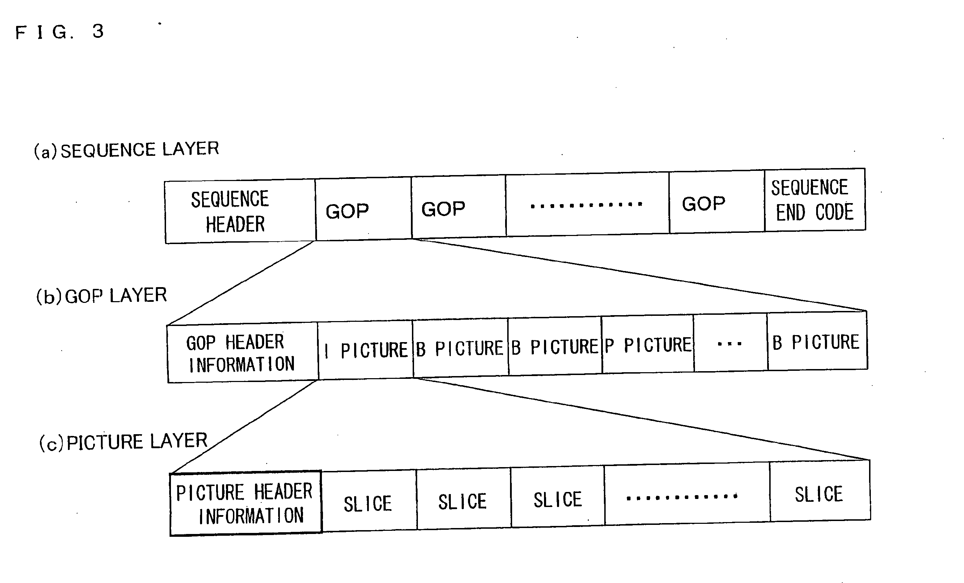

   Fig. 3 is an explanatory view illustrating part of a hierarchical structure of moving picture encoded data defined by MPEG2-Systems.
Fig. 4

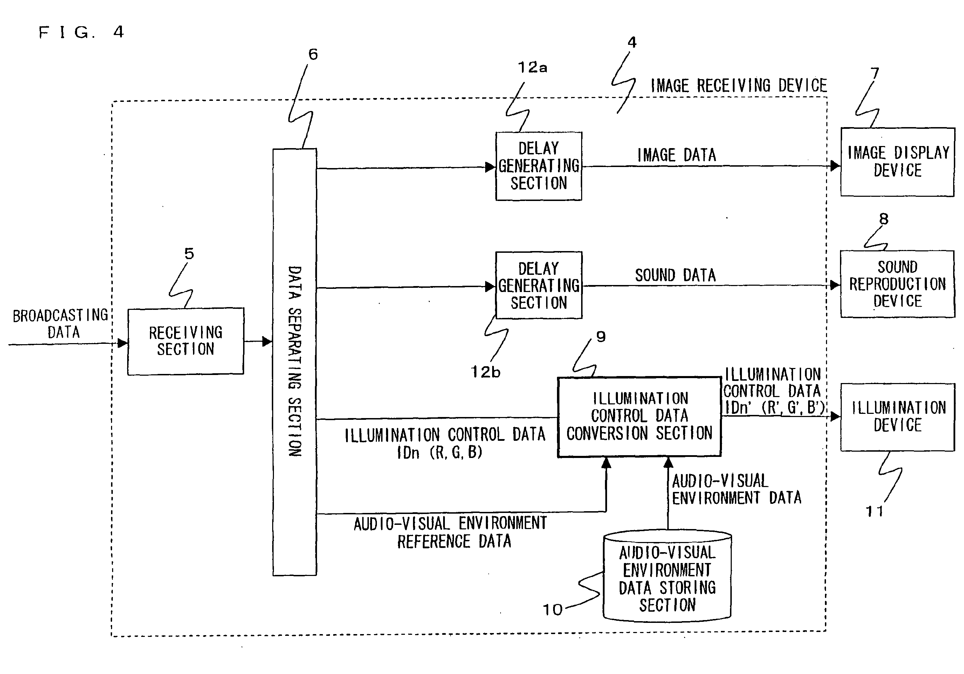

   Fig. 4 is a block diagram illustrating a schematic structure of an image receiving device in the first embodiment of the present invention.
Fig. 5

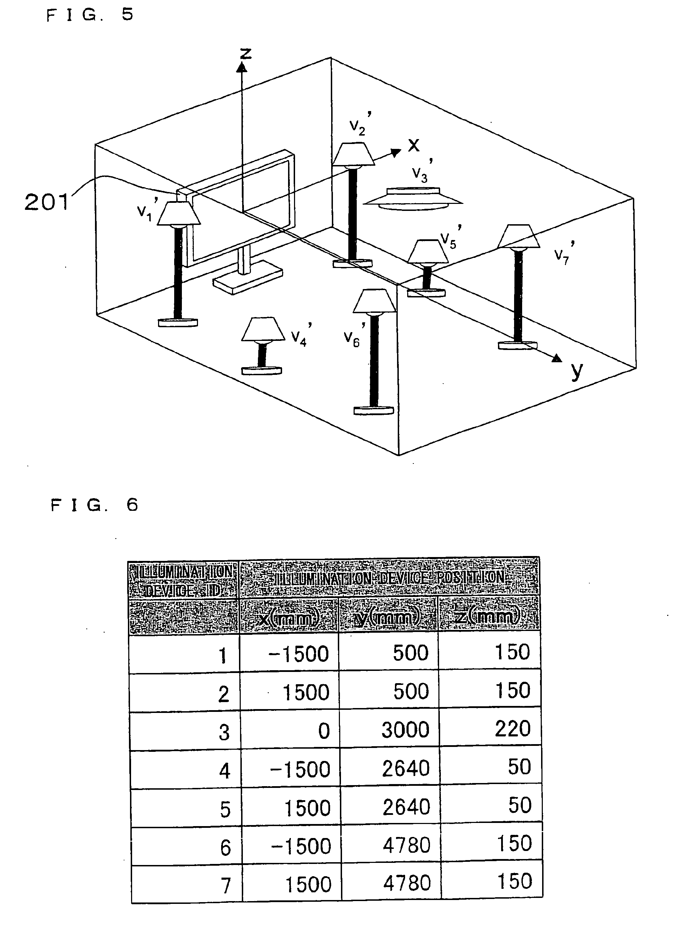

   Fig. 5 is an explanatory view illustrating an example of audio-visual environment space of a viewer.
Fig. 6
   Fig. 6 is an explanatory table illustrating the example of audio-visual environment data indicating audio-visual environment space of the viewer shown in Fig. 5.
Fig. 7

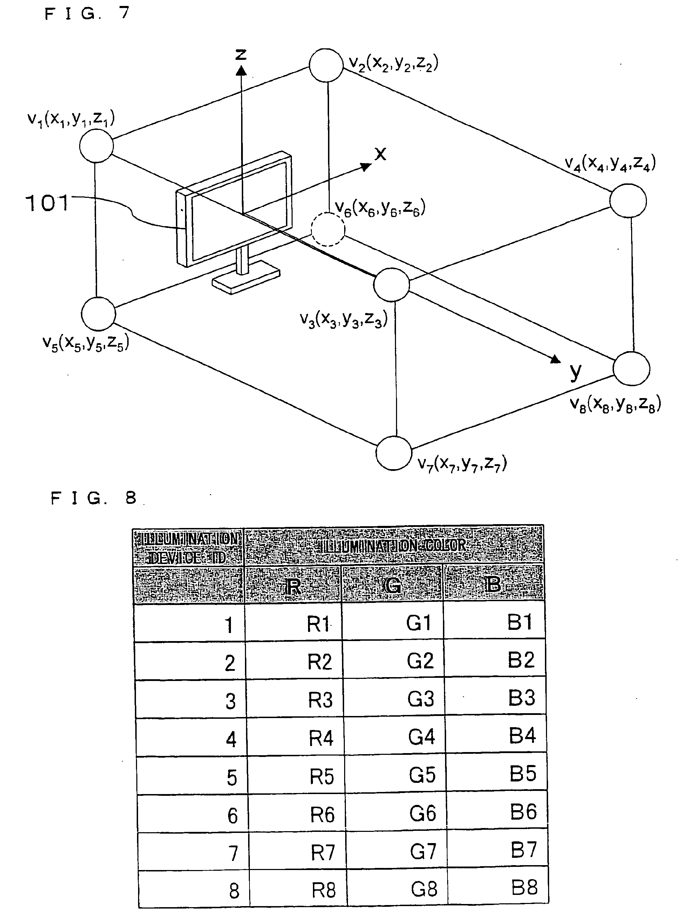

   Fig. 7 is an explanatory view illustrating a virtual audio-visual environment indicated by the audio-visual environment reference data shown in Fig. 2.
Fig. 8
   Fig. 8 is an explanatory table illustrating an example of illumination control data.
Fig. 9

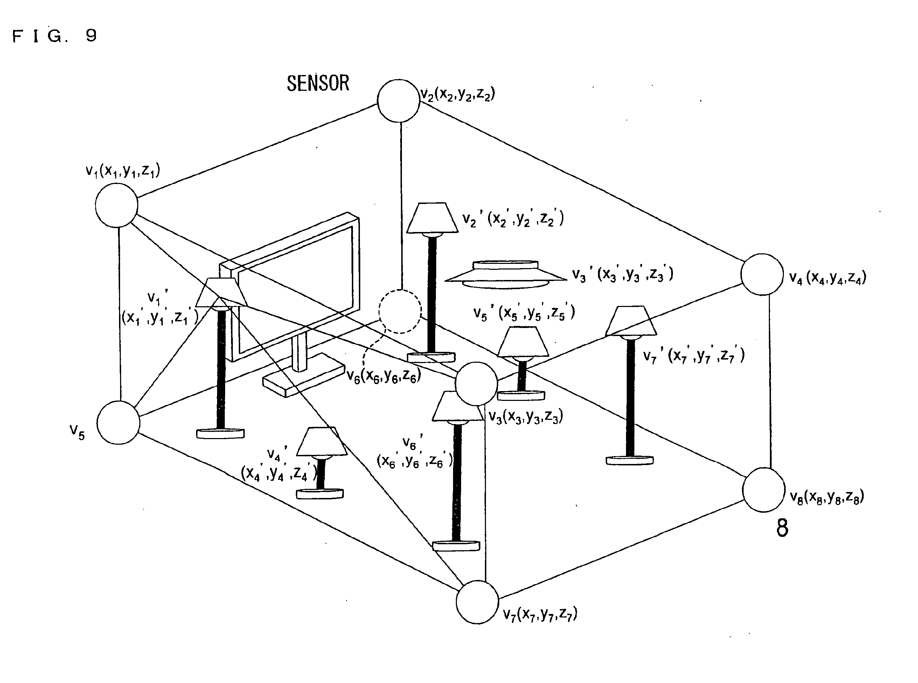

   Fig. 9 is an explanatory view schematically illustrating an example of a method for converting illumination control data.
Fig. 10

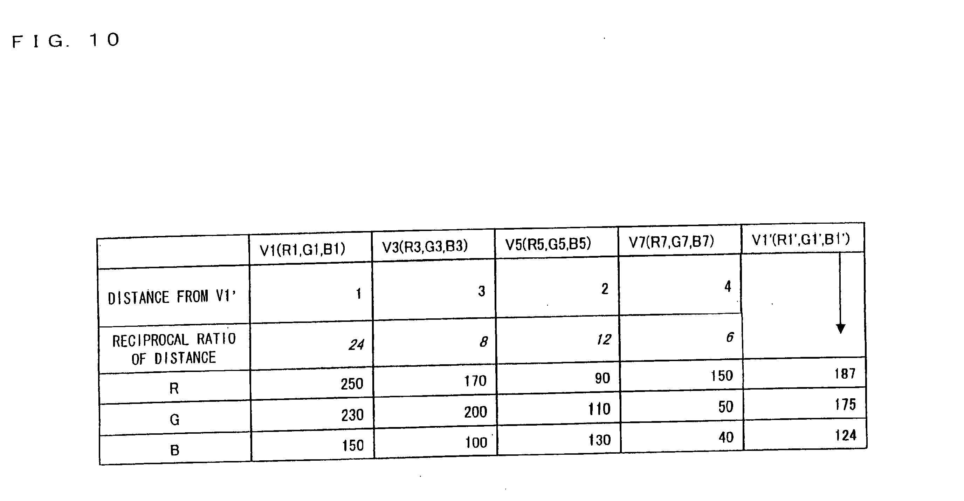

   Fig. 10 is an explanatory table explaining an embodiment of conversion of illumination control data.
Fig. 11

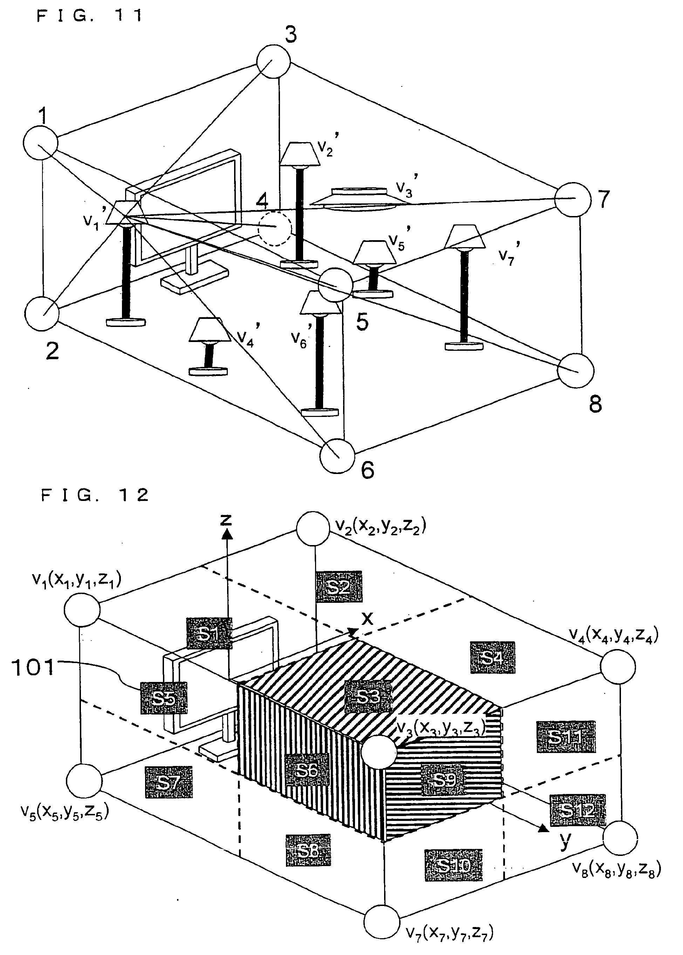

   Fig. 11 is an explanatory view schematically illustrating another example of a method for converting illumination control data.
Fig. 12
   Fig. 12 is an explanatory view schematically illustrating another example of a method for converting illumination control data with use of a virtual audio-visual environment indicated by the audio-visual environment reference data shown in Fig. 2.
Fig. 13

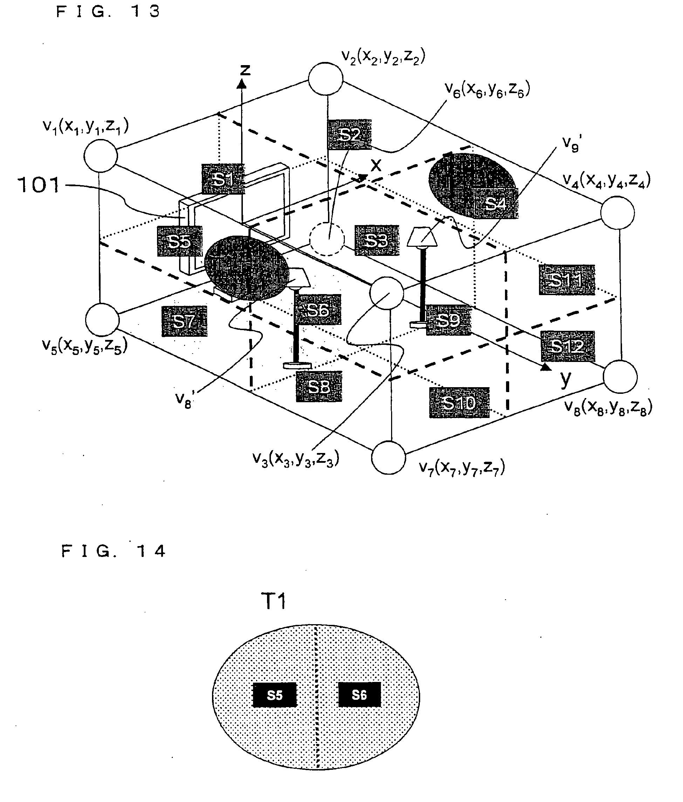

   Fig. 13 is a view illustrating illumination on a wall of the virtual audio-visual environment space shown in Fig. 12, by an illumination device installed in an actual audio-visual environment space.
Fig. 14
   Fig. 14 is an explanatory view for explaining an area conversion process of an actual audio-visual environment space in a case where the method for converting the illumination control data shown in Fig. 13 is adopted.
Fig. 15

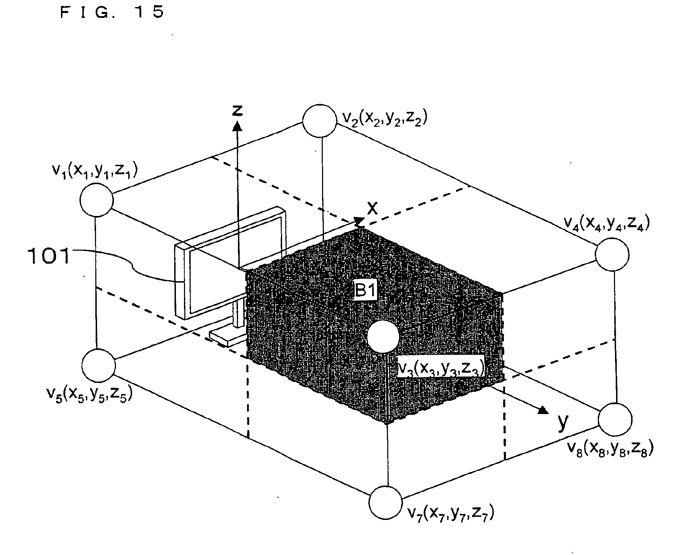

   Fig. 15 is an explanatory view schematically illustrating another example of the method for converting illumination control data with use of the virtual audio-visual environment indicated by the audio-visual environment reference data shown in Fig. 2.
Fig. 16

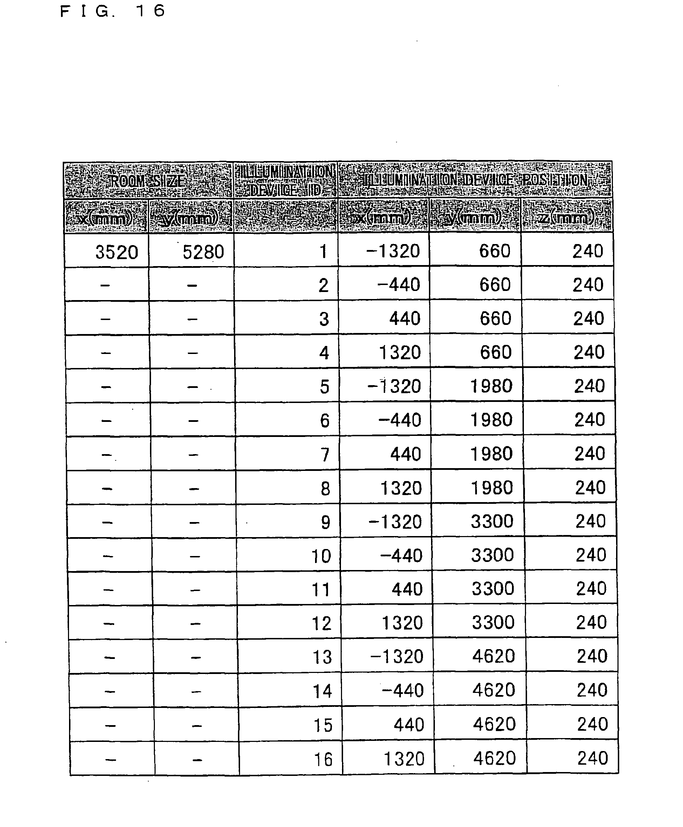

   Fig. 16 is an explanatory table illustrating another example of audio-visual environment reference data.
Fig. 17

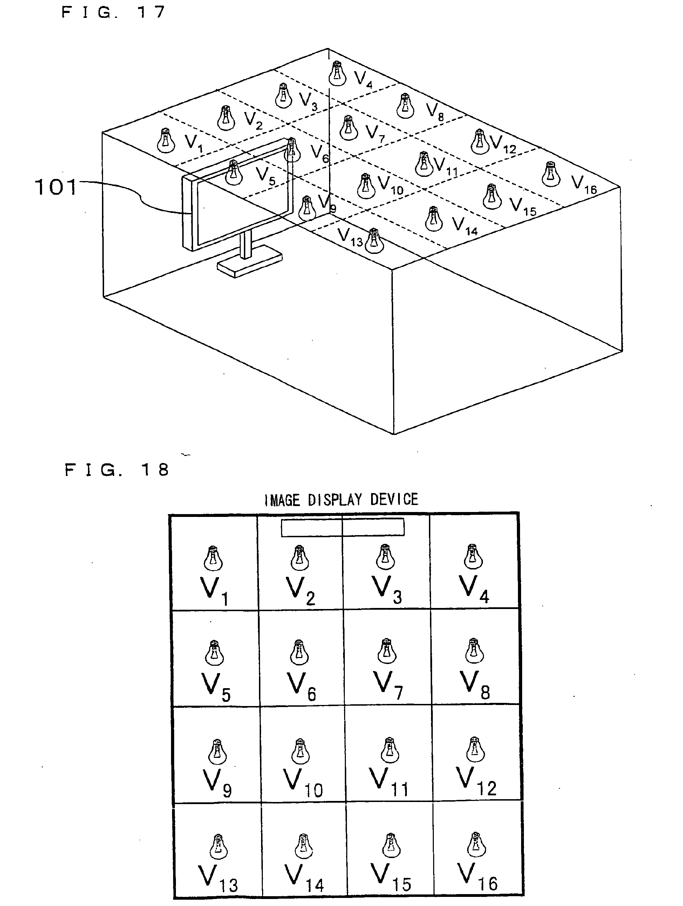

   Fig. 17 is an explanatory view illustrating a virtual audio-visual environment indicated by the audio-visual environment reference data shown in Fig. 16.
Fig. 18
   Fig. 18 is an explanatory view illustrating a two-dimensional arrangement of illumination devices provided on a ceiling of the audio-visual environment space shown in Fig. 17.
Fig. 19

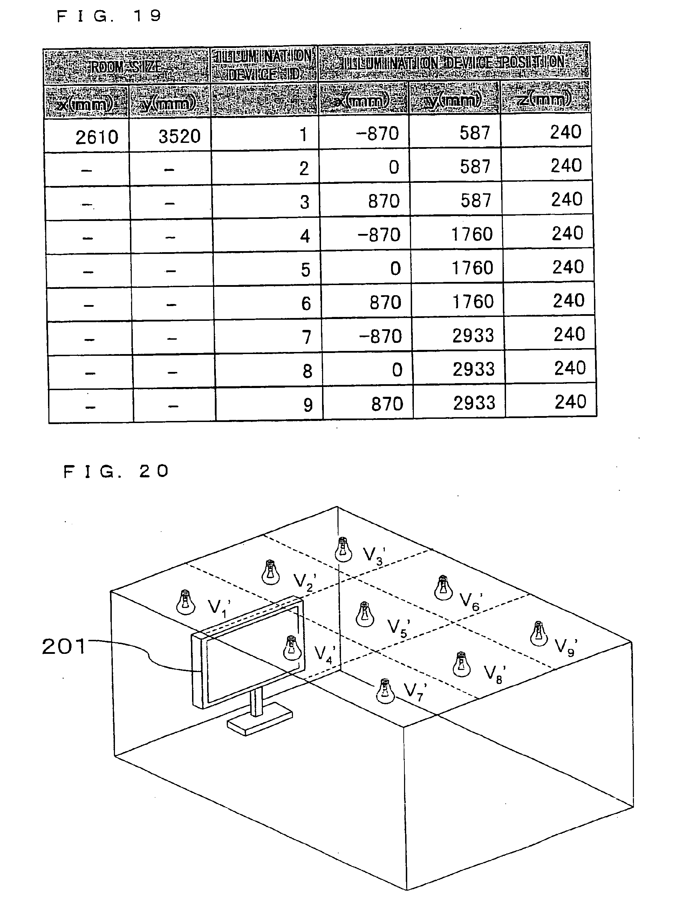

   Fig. 19 is an explanatory table illustrating another example of audio-visual environment data.
Fig. 20
   Fig. 20 is an explanatory view illustrating an actual audio-visual environment indicated by the audio-visual environment data shown in Fig. 19.
Fig. 21

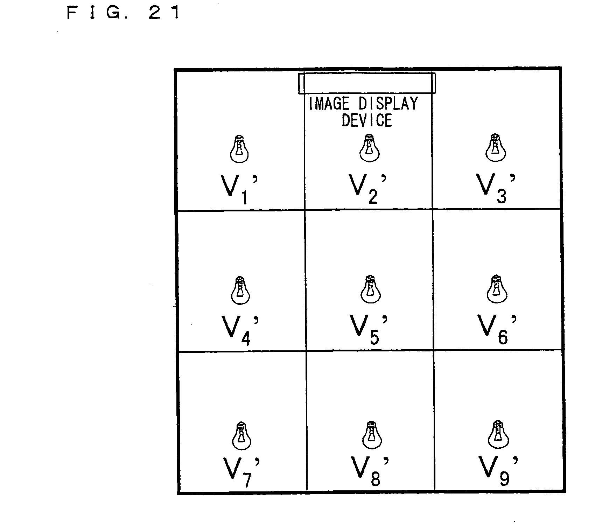

   Fig. 21 is an explanatory view illustrating a two-dimensional arrangement of illumination devices provided on a ceiling of the audio-visual environment space shown in Fig. 20.
Fig. 22

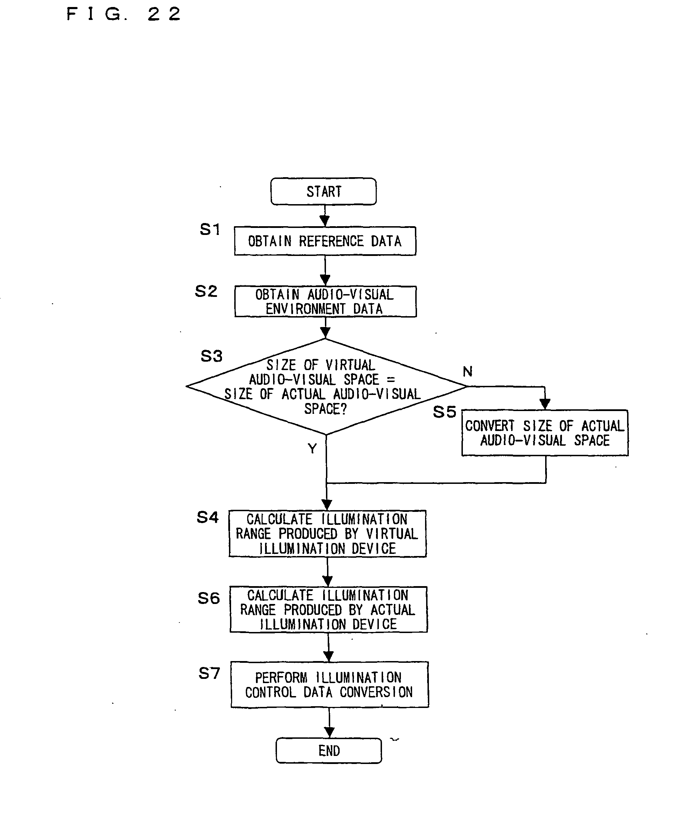

   Fig. 22 is a flow chart illustrating an example of operation of an illumination control data converting section.
Fig. 23

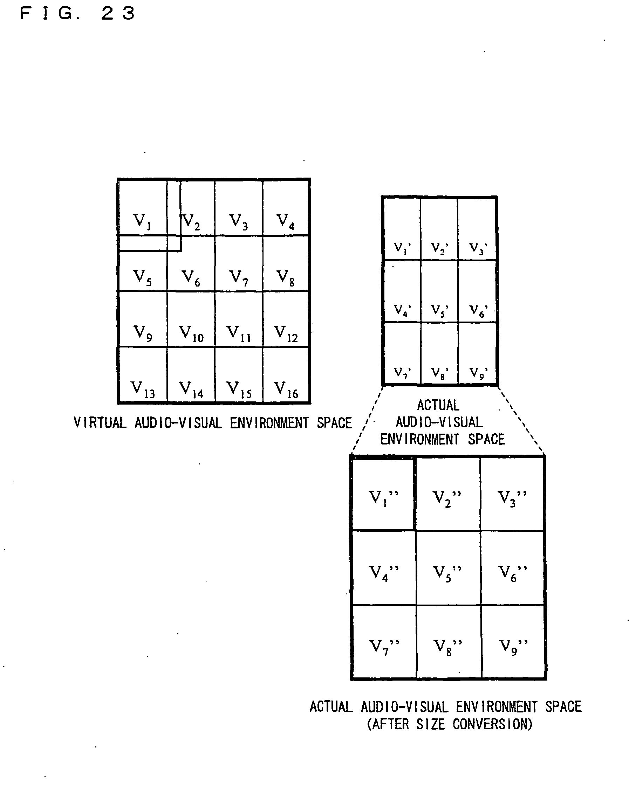

   Fig. 23 is an explanatory view explaining an area conversion process for an actual audio-visual environment space.
Fig. 24

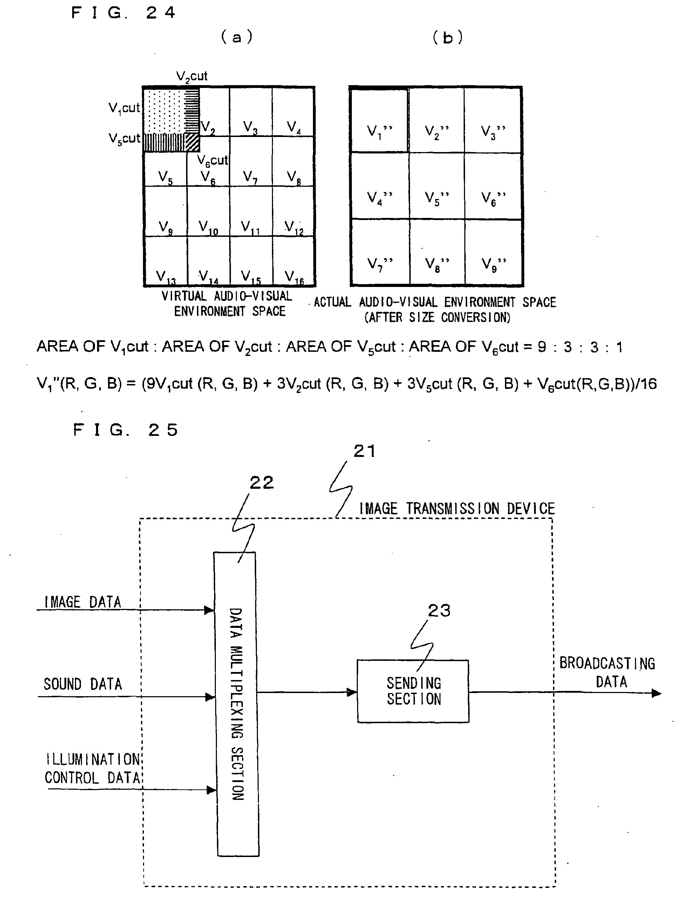

   Fig. 24 is an explanatory view explaining a conversion operation of illumination control data.
Fig. 25
   Fig. 25 is a block diagram illustrating a schematic structure of an image transmission device in a second embodiment of the present invention.
Fig. 26

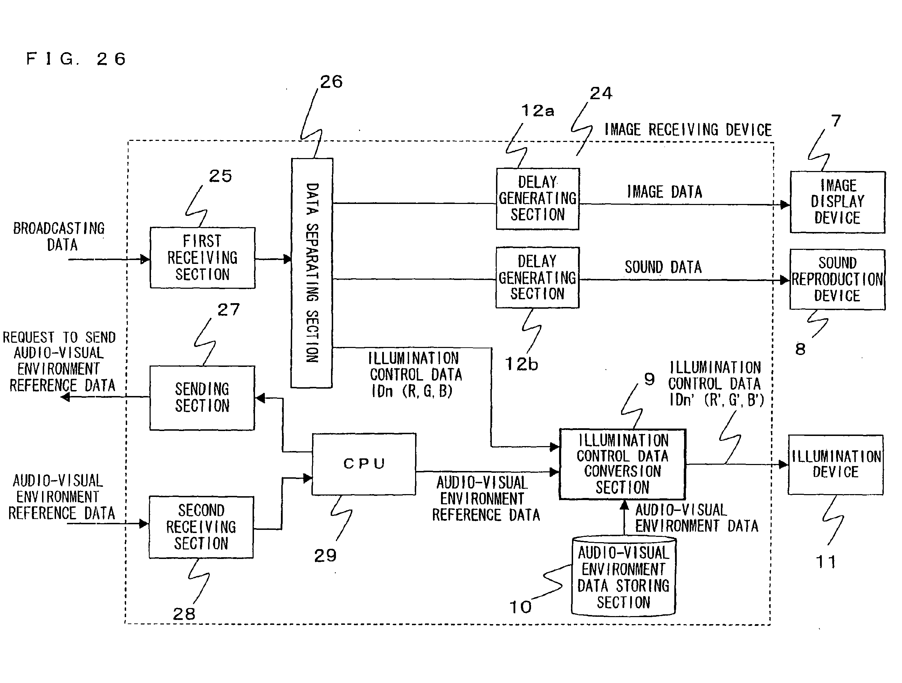

   Fig. 26 is a block diagram illustrating a schematic structure of an image receiving device in the second embodiment of the present invention.
Fig. 27

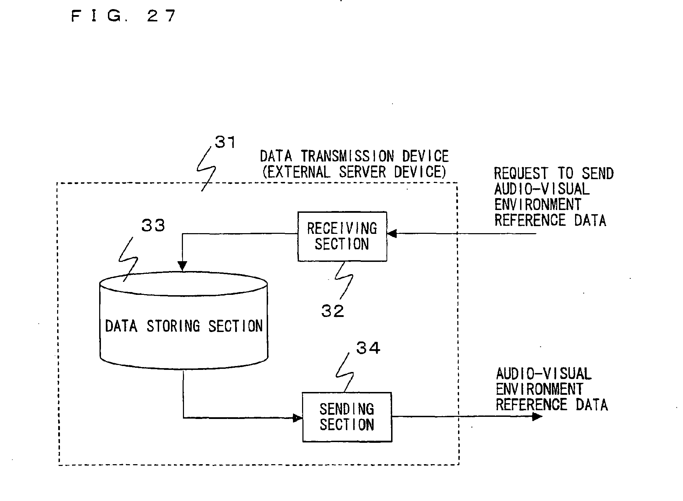

   Fig. 27 is a block diagram illustrating an external server device in the second embodiment of the present invention.
Fig. 28

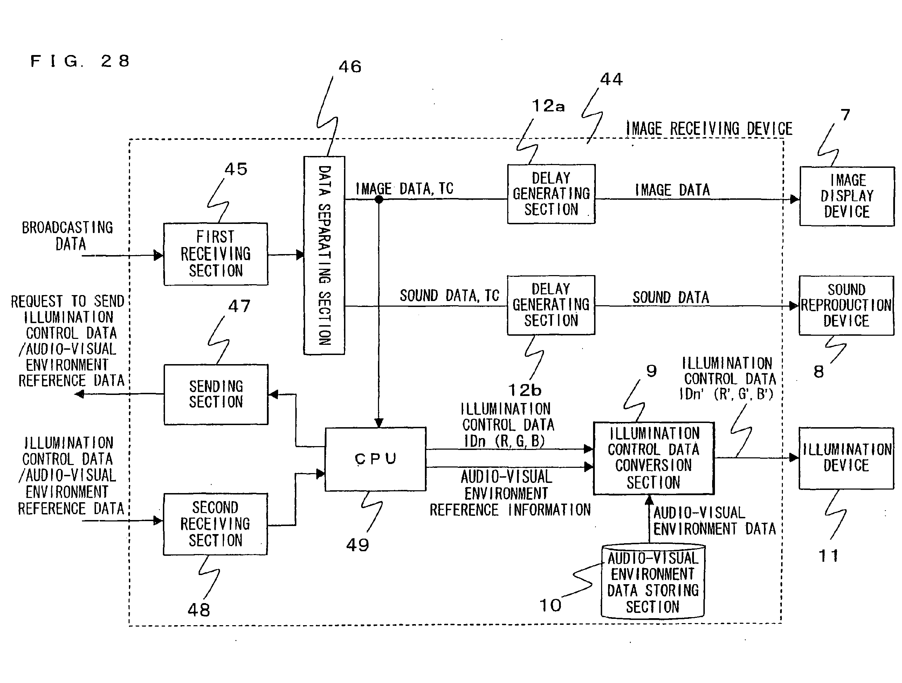

   Fig. 28 is a block diagram illustrating a schematic structure of an image receiving device in a third embodiment of the present invention.
Fig. 29

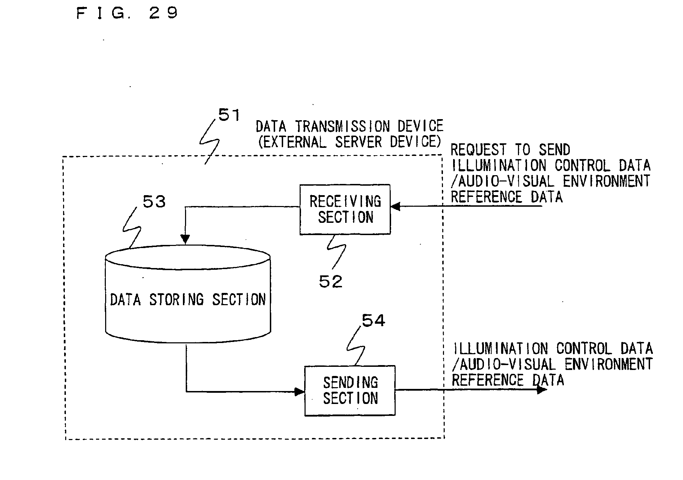

   Fig. 29 is a block diagram illustrating a schematic structure of an external server device in the third embodiment of the present invention.

### Reference Signs List

1, 31, and 51: Data Transmission Device
2 and 22: Data Multiplexing Section
3 and 23: Sending Section
4, 24, and 44: Image Receiving Device
5: Receiving Section
6 and 26: Data Dividing Section
7: Image Display Device
8: Sound Reproduction Device
9: Illumination Control Data Converting Section
10: Audio-visual Environment Data Storing Section
11: Illumination Device
12a and 12b: Delay Generating Section
21: Image Transmission Device
25 and 45: First Receiving Section
27 and 47: Sending Section
28 and 48: Second Receiving Section
29 and 49: CPU
32 and 52: Receiving Section
33 and 53: Data Storing Section
34 and 54: Sending Section
101 and 201: Image Display Device

### Description of Embodiments

The followings explain a data transmit-receive system of the present invention in detail with reference to the attached Figs. 1 to 29.

### <First Embodiment>

Fig. 1 is a block diagram illustrating a schematic structure of a data transmission device in a first embodiment of the present invention. The data transmission device 1 includes a data multiplexing section 2 and a sending section 3. The data multiplexing section 2 divides image data, sound data, illumination control data and audio-visual environment reference data, which correspond to each other, into a transport stream packet (TSP) format for multiplexing.

The image data, the sound data, the illumination control data, and the audio-visual environment reference data, which are received by the multiplexing section 2, are sent from a device which can communicate with the data transmission device 1 (e.g., a database for broadcasting).

At the sending section 3, the multiplexed data by the data multiplexing section 2 is, for example, attached with an error correction code, and then the multiplexed data is modulated. Then the sending section 3 sends the modulated data to a transmission channel as broadcasting data.

Here, the audio-visual environment reference data indicates virtual audio-visual data that the sending side assumes. For example, as shown in Fig. 2, positions of illumination devices in a virtual audio-visual environment space are described for each ID (identifier) in a table format.

In other words, the audio-visual environment reference data is data which indicates a position of at least one illumination device installed in a virtual audio-visual environment space where an image display device is installed.

Here, the position of each illumination device in the virtual audio-visual environment space is indicated in a coordination system wherein the center of a display of the image display device in the virtual audio-visual environment space is an original point (0, 0, 0). Therefore, the position of each illumination device in the virtual audio-visual environment space is indicated as a relative position with respect to the image display device in the virtual audio-visual environment space.

Moreover, the illumination control data is data for illumination-control for each of the illumination devices in the virtual audio-visual environment space. In other words, the illumination control data is control data for controlling each of the illumination devices described in the audio-visual environment reference data.

The illumination control data includes, for example, six-bit ID attached with respective eight-bit control data for red (R), green (G) and blue (B), for controlling an illumination device of the ID.

As described above, the audio-visual environment reference data can indicate presupposed audio-visual environment for generating illumination control data.

Fig. 3 is an explanatory view illustrating part of a hierarchical structure of moving picture encoded data defined by MPEG2 (Moving Picture Exerts Group 2) -Systems. Encoded data of a sequence of consecutive pictures has a six-layer hierarchical structure including a sequence layer, a GOP (Group Of Pictures) layer, a picture layer, a slice layer, a macro block layer, and a block layer (not shown). The data of picture layer includes picture header information in the lead, followed by data of a plurality of slice layers (slices).

In a picture header information region, a picture header region (picture_header) and a user data (extensions_and_user_data) region are provided. In the picture header region, predetermined various information such as a picture type and an entire frame scale is described. In the user data region, additional arbitrary data can be described. In the present embodiment, for example, the illumination control data is described in the user data region.

Here, the illumination control data is attached to the image data in each frame as described above. However, the audio-visual environment reference data is not necessarily attached to the image data in each frame. The audio-visual environment reference data may be attached to the image data regularly with suitable intervals or irregularly, by attaching it to scenes thereof related to each other in a story.

Here, the image data and the sound data are sent as the slice data, and the illumination control data and the audio-visual environment reference data are attached as the user data and then sent, for example. However, it should be noted that different data streams of respective image data, sound data, illumination control data, and audio-visual reference data may be multiplexed to be sent.

Moreover, in the present embodiment, the four types of data are multiplexed, and thus multiplexed data is sent as broadcasting data. However, the multiplexing is not essential to the present invention, and therefore a suitable sending method may be selected in accordance with needs. For example, each data may be sent respectively without being multiplexed. Further, the image data, the sound data and the illumination control data may be multiplexed while the audio-visual environment reference data only is sent independently.

Fig. 4 is a block diagram illustrating a schematic structure of an image receiving device (audio-visual environment control device) in the first embodiment of the present invention. In the image receiving device 4, a receiving section 5 receives broadcasting data in which image data, sound data, illumination control data, and audio-visual environment reference data are multiplexed. A data separating section 6 separates, from the broadcasting data, the image data, the sound data, the illumination control data, and the audio-visual environment reference data.

The image data and the sound data which are separated at the data separating section 6 are sent to an image display device 7 and a sound reproduction device 8, respectively. The illumination control data and the audio-visual environment reference data which are separated at the data separating section 6 are sent to an illumination control data converting section 9.

Next, an audio-visual environment information storing section 10 shown in Fig. 4 stores position information (audio-visual environment data) of each illumination device installed in a user's audio-visual environment space, and sends the audio-visual environment data to the illumination control data converting section 9 in response to a command from the illumination control data converting section 9.

Here, as shown in Fig. 5 for example, in a case where seven illumination devices are installed around an image display device 201 in the viewer's audio-visual environment space, and an illumination device v3' is a ceiling-installed type while the other illumination devices are transportable installation type having different heights from each other, an installation position of each illumination device installed in an actual audio-visual environment space is described as audio-visual environment data for each ID (identifier) in a table format as shown in Fig. 6.

Here, the position of each illumination device installed in the actual audio-visual environment space is indicated in a coordination system wherein the center of a display of the image display device in the actual audio-visual environment space is an original point (0, 0, 0). Therefore, the position of each illumination device in the actual audio-visual environment space is indicated as a relative position with respect to the image display device in the actual audio-visual environment space.

Here, regarding a method by which the image receiving device 4 obtains the audio-visual environment data on the actual viewing environment, an example may encompass a method in that a sensing device such as an optical sensor is provided on the image display device 7 whereby an installation position of the illumination device 11 is detected automatically. Moreover, another example may encompass a method in that an installation position of the illumination device 11 is inputted by a user with use of such as a GUI (Graphical User Interface). Needless to say, a method for obtaining the audio-visual environment data is not limited to the above-described methods, but may be other methods.

Moreover, each of the illumination devices 11 needs to be attached with ID (identifier), so that each of the illumination devices 11 can be controlled separately according to the installation positions. Alternatively, in a case where each of the illumination devices 11 is connected to individual terminals and illumination control data is sent individually from each of the terminals, each terminal and each illumination device 11 are needed to be associated with one another so that appropriate illumination control data can be sent to the illumination devices 11.

Next, by the illumination control data converting section 9, the illumination control data separated at the data separating section 6 is converted into illumination control data for controlling appropriately the illumination device 11 installed in the viewer's actual audio-visual environment space. The conversion of the illumination control data into the illumination control data is carried out based on the audio-visual environment reference data separated at the data separating section 6 and on the audio-visual environment data obtained from the audio-visual environment data storing section 10. The illumination control data converting section 9 outputs the thus converted data to the illumination device 11.

That is, from the audio-visual environment data storing section 10, the illumination control data converting section 9 obtains the audio-visual environment data indicating the positional arrangement of the illumination device 11 installed in the actual audio-visual environment space including the image display device 7 for actually displaying an image. Further, the illumination control data converting section 9 converts (or newly generates) illumination control data with use of the illumination control data received at the receiving section 5 so that an illumination effect can be obtained in an actual positional arrangement of the illumination device(s) 11 indicated by the audio-visual environment data. The aimed illumination effect is an illumination effect which is similar to an illumination effect obtained when illumination of an illumination device installed in a positional arrangement indicated by the audio-visual environment reference data received by the receiving section 5 is controlled.

Further, the illumination control data converting section 9 controls the illumination device 11 with use of the converted illumination control data corresponding to each illumination device 11 (more specifically, by sending the illumination control data to the corresponding illumination device 11). Accordingly, the image receiving device 4 has a function as a control device for the illumination device installed in the actual audio-visual environment space including the image display device 7 for actually displaying an image.

Moreover, output timing of the illumination control data sent to the illumination device 11 needs to be synchronous with output timings of the image data and the sound data. Therefore, by the illumination control data converting section 9 for example, the image data and the sound data separated at the data separating section 6 are delayed for the time required for converting the illumination control data into illumination control data corresponding to an actual audio-visual environment. Delay generating sections 12a and 12b are provided for synchronizing the output timing of the delayed image and sound data to the output timing of the illumination control data.

Further, an example of the illumination device 11 may encompass an illumination device in which LED light sources of R (red), G (green) and B (blue), which can be illumination-controlled individually, are arranged in a certain cycle. The LED light sources of three primary colors emit illumination light of desired color and brightness. However, it is sufficient that the illumination device 11 has a configuration that can control surrounding illumination color and brightness of the image display device 7, and such a configuration is not limited to the above described combination of the LED light sources which emit specific colors of light. Examples of the illumination device 11 may encompass: a combination of a white LED and a color filter; a combination of a white lamp/fluorescent tube and a color filter; and color lamps, etc.

Moreover, the image receiving device (audio-visual environment control device) 4 may be provided on the image display device 7 and the sound reproduction device 8 either integrally or separately.

As described above, the image receiving device of the present embodiment can convert the illumination control data obtained externally into illumination control data corresponding to actual audio-visual environment. This makes it possible to appropriately control the illumination device 11 installed in an audio-visual environment space varying with viewers.

The following explains a method, at the illumination control data converting section 9, for converting illumination control data obtained externally into desired illumination control data with use of audio-visual environment reference data and audio-visual environment data on an actual viewing environment.

Fig. 7 is a layout plan illustrating a virtual audio-visual environment indicated by the audio-visual environment reference data shown in Fig. 2. Fig. 7 schematically shows positions of illumination devices in the virtual audio-visual environment space assumed by the sender (broadcast station) which sends image data. Here, as shown in Fig. 7, it is assumed that a state where eight illumination devices v1 to v8 are provided around an image display device 101 (at eight corners of the audio-visual environment space) is described as audio-visual environment reference data. Moreover, as described above, three-dimensional positions of the illumination devices v1 to v8 in the virtual audio-visual environment space are preferable to be defined in three-dimensional coordinates by x-axis, y-axis and z-axis, where a center of a display of the image display device 101 is an original point (0, 0, 0). Further, the y-axis is preferable to be defined so as to conform to a normal direction with respect to the display of the image display device 101.

Although the example in Fig. 7 shows the virtual audio-visual environment, an actual audio-visual environment is also preferable to be defined similarly in a coordinate system. This is because color and brightness of light from an illumination device are determined based on a relative positional relation with the image display device. With definition of the coordinate system of the audio-visual environment space, the positions of the illumination devices described in (i) the audio-visual environment reference data and (ii) the audio-visual environment data on the actual viewing environment serve as the relative positions with respect to the respective image display devices. Accordingly, for example, in comparison of positions of the illumination devices in the virtual audio-visual environment space and the actual audio-visual environment space, an operation is not needed for conforming the positions and display directions of the respective image display devices to one another. Moreover, with the descriptions as described above, the position and display direction of the image display device in each audio-visual environment space can be omitted from the audio-visual environment reference data and the audio-visual environment data.

Next, the illumination control data is, as shown in Fig. 8 for example, information for controlling each of the eight illumination devices v1 to v8. The illumination control data is generated for performing appropriate illumination control according to images displayed by the image display device 101 in the virtual audio-visual environment space. Accordingly, in a case where the illumination devices in the virtual audio-visual environment space are controlled with use of the illumination control data, an optimal illumination control for providing a more realistic atmosphere can be performed in displaying images.

Next, Fig. 5 is a layout plan showing an actual audio-visual environment indicated by audio-visual environment data indicating positions of illumination devices in an actual audio-visual environment space shown in Fig. 6. Fig. 5 schematically shows the positions of the illumination devices installed in the actual audio-visual environment space. Here, as shown in Fig. 5, it is assumed that a state where seven illumination devices are provided around an image display device 201 is described as audio-visual environment data.

Here, an illumination device v3' is a ceiling-installed type, and the other illumination devices are transportable installation type having different heights from each other. Moreover, as above explained, a coordinate system of the actual audio-visual environment space as shown in Fig. 5 is also defined by x-axis, y-axis, and z-axis, where a center of a display of the image display device 201 is indicated as an original point (0, 0, 0). Further, the y-axis is defined so as to always conform to a normal direction with respect to the display of the image display device 201. That is, illumination positions, which are described in the audio-visual environment data indicating the positions of the illumination devices in the actual audio-visual environment space shown in Fig. 6, are relative positions with respect to the image display device 201.

As described above, the respective eight illumination devices are provided, as shown in Fig. 7, at the eight corners of the virtual audio-visual environment space indicated by the audio-visual environment reference data. On the other hand, in the actual audio-visual environment space, as shown in Fig. 5, the respective seven illumination devices are provided at arbitrary positions. That is, in the two audio-visual environment spaces, the positional arrangement of the illumination devices with respect to the respective image display devices are completely different from one another. Accordingly, the illumination control data for appropriately controlling the illumination device in the virtual audio-visual environment space cannot be used as it is, for controlling each of the illumination devices installed in the actual audio-visual environment space. Therefore, the illumination control data corresponding to the virtual audio-visual environment needs to be converted into illumination control data corresponding to the actual audio-visual environment.

The following explains a method for converting illumination control data.

First, as described above, in the present embodiment, the position of the illumination device in the audio-visual environment space is, in particular, a relative position with respect to the image display device. That is, for example, in a case where the position of the illumination device is defined as an absolute position, the position of the illumination device would not change even when the image display device is moved in the audio-visual environment space, or when the display direction is changed. However, needless to say, in the above described cases, colors and brightness of illumination light from the illumination devices need to be changed. On the other hand, in a case where the relative positional relation between the illumination device and the image display device is not changed, colors and brightness of the illumination light from each of the illumination devices need not be changed, even when the position or direction of the image display device are changed, or when a room size is changed.

As described above, the installation position of each illumination device needs to be indicated as the relative position with respect to the image display device. Accordingly, it is preferable that a coordinate system of the audio-visual environment space is defined by x-axis, y-axis, and z-axis, where a center of a display of the image display device is indicated as an original point (0, 0, 0). Further, the y-axis is preferable to be defined so as to always conform to a normal direction with respect to the display of the image display device. The definition of the coordinate system allows the position of the illumination device to be indicated in a relative position with respect to the image display device. Needless to say, the coordinate system may not have the original point centered at the image display device as described above. However, for example, in a case where one of the corners in the audio-visual environment space is defined as an original point, items that are a position and display direction of the image display device are required as audio-visual environment reference data and audio-visual environment data.

Next, a specific method for converting illumination control data at an illumination control data converting section 9 is explained.

First, the coordinate systems of the audio-visual environment reference data and the audio-visual environment data on the actual viewing environment are conformed to one another, thereby fitting the both audio-visual environment spaces together. Fig. 9 is a schematic view in which the schematic view of the virtual audio-visual environment space shown in Fig. 7 and the schematic view of the actual audio-visual environment space shown in Fig. 5 are fit together by conforming the coordinate systems to one another. The coordinate systems are conformed, as above described, for the purpose of comparison of relative positional relations between the respective image display devices and illumination devices in both the audio-visual environment spaces, by conforming the centers, which are original points in the coordinate systems, of the displays of the image display devices.

Next, illumination control data for controlling the illumination device v1' (x1, y1, z1) shown in Fig. 9 is calculated from illumination control data for controlling the illumination devices v1, v3, v5, and v7 installed respectively at four corners of the wall nearest to the illumination device v1' in the virtual audio-visual environment space. More specifically: distances between the illumination device v1' and each of the illumination devices v1, v3, v5, and v7 are calculated; reciprocal ratios for thus obtained distances are calculated; and respective contribution ratios (weight) of illumination devices v1, v3, v5, and v7 with respect to the illumination device v1' are determined according to the reciprocal ratios. Further, based on the illumination control data (R, G, B) for the respective illumination devices v1, v3, v5, and v7, operations are performed according to the determined weighting coefficient, whereby the illumination control data (R, G, B) for the illumination device v1' is calculated.

That is, the illumination control data converting section 9 calculates distances between one of the illumination devices indicated by the audio-visual environment data (a first illumination device) and a plurality of illumination devices, which are positioned near to the first illumination device (or, have a specific positional relation with the first illumination device), indicated by the audio-visual environment reference data (second illumination devices), in a space produced by conforming the two coordination systems respectively indicated by the audio-visual environment data and the audio-visual environment reference data. Further, the illumination control data converting section 9 performs a weighting operation on values of illumination control data corresponding to the respective second illumination devices, with use of the obtained distances. Thus weighted values of the illumination control data are used for calculating a value of illumination control data corresponding to the first illumination device.

The following explains an operation method with reference to Fig. 10 showing a specific example.

Fig. 10 shows, regarding the illumination devices v1, v3, v5, and v7 in the virtual audio-visual environment space, distances from the illumination device v1' installed in the actual audio-visual environment space, reciprocal ratios for the distances, and illumination control data (R, G, B) for the respective illumination devices. The distances of the illumination devices v1, v3, v5, and v7 from the illumination device v1' are 1, 3, 2, and 4, respectively, and the reciprocal ratios for the distances are 24, 8, 12, and 6, respectively.
Further, regarding the illumination control data for controlling the illumination devices v1, v3, v5, and v7: the illumination device v1 takes R=250, G=230, and B=150; the illumination device v3 takes R=170, G=200, and B=100; the illumination device v5 takes R=90, G=110, and B=130; and the illumination device v7 takes R=150, G=50, and B=40.

First, regarding the distances from the illumination device 1v', the values in Fig. 10 are shown just for easy examples. In practice, the values would be more complex. The reciprocal ratios for the distances are obtained from the steps of: multiplying all the distances of the illumination devices v1, v3, v5 and v7 from the illumination device 1v' (1 × 3 × 2 × 4 = 24); and dividing the multiplied value by the respective distances of the illumination devices v1, v3, v5, and v7 from the illumination device 1v' (v1: 24/1 = 24, v3: 24/3 = 8, v5: 24/2 = 12, and v7: 24/4 = 6).

Next, the obtained reciprocal ratios of the illumination devices (v1, v3, v5, and v7) and the illumination control data (R, G, and B) are used for obtaining illumination control data (R1', G1', and B1') for the illumination device v1'. First, an optimal value for a red light source (R) is calculated. R values of the illumination devices v1, v3, v5, and v7 are, v1: 250; v3: 170; v5: 90, and v7: 150. These values are multiplied by the reciprocal ratios for the distances of the illumination devices v1, v3, v5, and v7 from the illumination device v1' (v1: 250 × 24 = 6000, v3: 170 × 8 = 1360, v5: 90 × 12 = 1080, v7: 150 × 6 = 900). The obtained values are added together (6000 + 1360 + 1080 + 900 = 9340), and thus obtained value is divided by a total of the reciprocal ratios for the distances (24 + 8 + 12 + 6 =50) for obtaining the illumination control data R1' for the red light source (R) of the illumination device v1' (9340/50 = 186.8).

Illumination control data G1' for a green light source (G) and illumination control data B1' for a blue light source (B) are obtained in similar ways. Consequently, the illumination control data (R1': 187, G1': 175, B1': 124) for appropriately controlling the illumination device v1' is calculated. The above operation is performed on the other illumination devices (v2', v3', v4', v5', v6', v7', and v8') in the actual audio-visual environment space, thereby generating illumination control data for controlling all of the illumination devices installed in the actual audio-visual environment space. Further, as described above, externally obtained illumination control data is attached to image data in each frame. Accordingly, appropriate illumination control data according to an image to be displayed by the image display device 201 can be generated by repeatedly performing the illumination control data conversion process in each frame.

In the present embodiment, the distance between the illumination device installed in the actual audio-visual environment space and the illumination device installed in the virtual audio-visual environment space is calculated, and the weighting interpolation is performed with use of the reciprocal ratio for the distance. However, the method for weighting may be another method, and is not limited to the above described method. Moreover, although the illumination control data is assumed to have information volume of 8-bit for each of R, G and B in the explanation, the illumination control data is also not limited to this.

Moreover, in the present embodiment, the illumination control data for controlling the illumination device installed in the actual audio-visual environment space is obtained from the illumination control data corresponding to the four illumination devices installed on the wall which is the nearest to the illumination device in the virtual audio-visual environment space. However, as shown in Fig. 11 for example, the illumination control data for controlling the illumination device installed in the actual audio-visual environment space may be obtained from illumination control data for controlling all of the eight illumination devices installed at the eight corners in the virtual audio-visual environment space. Moreover, illumination control data for controlling the illumination devices installed in the actual audio-visual environment space may be obtained through a specific interpolation operation from illumination control data for controlling the nearest two or more illumination devices.

Further, the present embodiment describes the method in which the weighting is performed according to the reciprocal ratios for the distances between the respective illumination devices installed at the eight corners in the virtual audio-visual environment space and the illumination device installed in the actual audio-visual environment space, thereby generating the illumination control data. However, the method for generating the illumination control data at the illumination control data converting section 9 is not limited to this. The followings explain two examples other than the above described method for generating the illumination control data, with reference to Figs. 12 to 15.

First, the following explains a method for generating illumination control data from regions of a wall in a virtual audio-visual environment space illuminated by illumination devices installed in an actual audio-visual environment space. Fig. 12 shows the virtual audio-visual environment space where eight illumination devices v1 to v8 are installed at eight corners in the space, as is the case with the above described virtual audio-visual environment space model. Note that, three-dimensional positions of the illumination devices v 1 to v8 are preferably defined in three-dimensional coordinates by x-axis, y-axis and z-axis, where a center of a display of an image display device 101 is an original point (0, 0, 0). Further, the y-axis is preferable to be defined so as to conform to a normal direction with respect to the display of the image display device 101.

In the method, a ceiling, a floor, and four walls in the audio-visual environment space are respectively divided in four regions S1 to S24 (S13 to S24 are not illustrated). The divided regions are assigned with illumination values of the nearest illumination devices, respectively. For example, each of the three regions (S3, S6 and S9), which contact with the illumination device v3 in Fig. 12, is assigned with an illumination value of the illumination device v3.

Next, illumination devices to be installed in an actual audio-visual environment space are installed in the virtual audio-visual environment space model, thereby generating illumination control data of the illumination devices in the actual audio-visual environment space from illumination in the virtual audio-visual environment space. Fig. 13 illustrates that illumination devices (v8' and v9') to be installed in an actual audio-visual environment space are provided in the virtual audio-visual environment space. Regions labeled with T1 and T2 in Fig. 13 are illuminated regions, by the illumination devices (v8' and v9'), on the wall in the virtual audio-visual environment space. Here, the regions S1 to S24, which correspond to the illuminated regions T1 and T2, in the virtual audio-visual environment space are obtained. Illumination control data for controlling illumination devices installed at the obtained regions in the virtual audio-visual environment space is used for controlling the illumination devices (v8' and v9') installed in the actual audio-visual environment space.

The illuminated regions T1 and T2 may be calculated by an image receiving device 4 based on information inputted by a user, and subsequently stored in an audio-visual environment data storing section 10. For example, the illuminated regions T1 and T2 may be obtained by the image receiving device 4 with use of a value. The value is obtained through the following steps of: placing an illumination device 11, which is to be actually used, at a position apart by a specific distance from the wall; emitting light at a specific light intensity by the illumination device; and obtaining the value by actually measuring a illuminated region on the wall by the illumination device. Alternatively, the image receiving device 4 may calculate the illuminated regions T1 and T2 by a specific operation based on information of specifications of the illumination device 11 and an illumination direction, which are inputted in the image receiving device 4 by a user. A timing for calculating the illuminated regions T1 and T2 is not particularly limited, as long as the timing is before receiving broadcasting data.

Fig. 14 shows an example of divided regions on a wall in a virtual audio-visual environment space corresponding to the illuminated region T1. In Fig. 14, the illuminated region T1 includes regions S5 and S6 (S5 : S6 = 1 : 1). In this case, illumination control data for controlling the illumination device v8' installed in the actual audio-visual environment space is generated by weighting to illumination value of the region S5 (illumination control data for controlling the illumination device v1) and illumination value of the region S6 (illumination control data for controlling the illumination device v3), according to area ratios of the regions (in Fig. 14, S5 : S6 = 1 : 1). More specifically, an illumination value of the illuminated region T1 is obtained by totalizing a half value of the illumination control data for the region S5 and a half value of the illumination control data for the region S6.

That is, the respective walls which are three-dimensionally surrounding the virtual audio-visual environment space are divided into a plurality of regions, with use of the audio-visual environment reference data received by the receiving section 5 and the illumination control data corresponding to the audio-visual environment reference data. The illumination control data converting section 9 determines illumination data (e.g., illumination color and light intensity, etc.) for each of the divided region, by utilizing, for example, illumination control data for controlling illumination device which is the nearest to the divided region. Further, the illumination control data converting section 9 obtains, from the audio-visual environment data storing section 10, audio-visual environment data including illuminated region data indicating illuminated region (e.g., T1) of the illumination device 11, and calculates area ratios of each divided region included in a overlapped region of the divided regions and an illuminated region indicated by the illuminated region data. Further, the illumination control data converting section 9 performs a weighting operation on illumination control data for each of the divided regions according to the calculated area ratios. The thus weighted illumination control data for each divided region is used for calculating illumination control data for controlling illumination device 11 which forms the illuminated region.

For example, the illumination control data converting section 9 calculates illumination intensity in the illuminated region by totalizing illumination intensity for the divided regions which is weighted according to the area ratio of each divided region included in the illuminated region.

The above described method for generating illumination control data allows appropriate illumination control even when indirect illumination is adopted in the actual audio-visual environment space.

Next, the following explains a method for generating illumination control data which is easier than the above described two methods. In this method, a virtual audio-visual environment space is divided into a plurality of blocks according to a number of illumination device installed in the virtual audio-visual environment space. Illumination control data is generated according to which block in an actual audio-visual environment space an illumination device is installed in.

Fig. 15 shows a virtual audio-visual environment space. As is the case with the above described virtual audio-visual environment space model, eight illumination devices v1 to v8 are installed at eight corners of the space, respectively. Here, the virtual audio-visual environment space is divided into eight spaces (blocks). Each of the blocks is assigned with an illumination values of any one of the illumination devices v1 to v8 installed at a corner of each block. For example, a block labeled with B1 in Fig. 15 is assigned with an illumination value of the illumination device v3.

Next, in the virtual audio-visual environment space set as above, illumination devices to be installed in an actual audio-visual environment space are provided. An illumination value, which is assigned to a block at which a light source section of the illumination device is positioned, is regarded as an illumination value (illumination control data) of an illumination device installed in an actual audio-visual environment space.

That is, the illumination control data converting section 9 assigns illumination control data for controlling one illumination device to respective divided spaces generated by dividing the virtual audio-visual environment space into a plurality of spaces each of which includes one illumination device, with use of audio-visual environment reference data received by a receiving section 5 and illumination control data corresponding to the audio-visual environment reference data. Further, the illumination control data converting section 9 assigns illumination control data, which is assigned to the divided space, to an actual illumination device included in the divided space in a case where the virtual audio-visual environment space and an actual audio-visual environment space indicated by audio-visual environment data are fitted together.

The above described method for generating illumination control data allows to appropriately control an illumination device in an actual audio-visual environment space without performing a complex operation. Moreover, in case where an actual audio-visual environment space is larger than a virtual audio-visual environment space, whereby an illumination device to be installed in the actual audio-visual environment space is positioned outside of the virtual audio-visual environment space, eight divided spaces may be extended outward to decide a space (block) at which an illumination device in the actual audio-visual environment space is positioned.

Further, in the present example, the illumination control data is converted with use of the audio-visual environment reference data in which the virtual audio-visual environment space is defined by the positions of the eight illumination devices. However, the audio-visual environment reference data is not limited to this. Next, the following explains an example in that audio-visual environment reference data different from the above described audio-visual environment reference data is sent from a sender and a conversion process of illumination control data different from the above described is performed.

Here explains a case where an illumination device installed in an actual audio-visual environment space is provided only on a ceiling of the actual audio-visual environment space, and further, an illumination device installed in a virtual audio-visual environment space is also provided only on a ceiling. This conversion method is targeted at an audio-visual environment space generally seen as, for example, a home theater system. This method can perform a conversion process for illumination control data much easier than the above described conversion method.

Fig. 16 shows an example of audio-visual environment reference data in the present example. Fig. 17 is a layout plan showing a virtual audio-visual environment indicated by the audio-visual environment reference data shown in Fig. 16. Fig. 17 schematically shows an arrangement of illumination devices in a virtual audio-visual environment space assumed by a sender (broadcasting stage) which sends image data. Here, as shown in Fig. 17, a state where sixteen illumination devices v1 to v16 are arranged at even intervals around an image display device 101 (on a ceiling of an audio visual environment space) in a certain sized room is described as audio-visual environment reference data.

Note that, in a general home theater system, in consideration of an acoustic effect, an image display device is generally installed in a center of a wall in an audio-visual environment space, with a display screen is in parallel with the wall. Accordingly, here, it is assumed that the image display device 101 is provided along a wall in the virtual audio-visual environment space. Moreover, in the present example also, a position of each illumination device in the virtual audio-visual environment is described in a relative position with respect to the image display device 101 in the virtual audio-visual environment space.

Moreover, Fig. 18 shows two-dimensional arrangement of the illumination devices provided on the ceiling of the audio-visual environment space shown in Fig. 17.

Next, Fig. 19 shows an example of audio-visual environment data indicating positions of illumination devices installed in an actual audio-visual environment space. Fig. 20 is a layout plan showing an actual audio-visual environment indicated by audio-visual environment data indicating positions of the illumination devices installed in the actual audio-visual environment space shown in Fig. 19. Fig. 20 schematically shows the positions of the illumination devices installed in the actual audio-visual environment space. Here, as shown in Fig. 20, it is assumed that a state where nine illumination devices v1 to v9 are arranged at even intervals around an image display device 201 (on a ceiling of the audio visual environment space) in a certain sized room is described as the audio-visual environment data.

As is the case with the above described audio-visual environment reference data, the audio-visual environment data of the present example is also assumed that the image display device 201 is provided along a wall in the virtual audio-visual environment space. Moreover, a position of each illumination device in the actual audio-visual environment is described in a relative position with respect to the image display device 201 in the actual audio-visual environment space.

Moreover, Fig. 21 shows two-dimensional arrangement of the illumination devices provided on the ceiling of the audio-visual environment space shown in Fig. 20.

The following explains an illumination control data conversion method in a case where: illumination devices provided in a virtual audio-visual environment space indicated by audio-visual environment reference data and illumination device installed in an actual audio-visual environment space are both installed at even intervals on ceilings in the audio-visual environment spaces; image display devices are provided along walls in the audio-visual environment spaces, respectively; and the virtual audio-visual environment space and the actual audio-visual environment space are different in: sizes thereof (room size); numbers of illumination devices; and installation positions of the illumination devices.

Fig. 22 shows an operation flow of an illumination control data converting section 9 in the present example. First, audio-visual environment reference data separated at a data separating section 6 is obtained (step 1), and audio-visual environment data stored in an audio-visual environment data storing section 10 is obtained (step 2).

Next, it is judged, from the audio-visual environment reference data and the audio-visual environment data, whether or not sizes of both the audio-visual environment spaces are conformed to one another (step 3). In a case where the sizes of both the audio-visual environment spaces are conformed to one another, illumination range of each illumination device provided in a virtual audio-visual environment space indicated by the audio-visual environment reference data is calculated (step 4), and illumination range of each illumination device provided in an actual audio-visual environment space is calculated (step 6). The illumination ranges may be figured out by working out same shaped rectangles (matrices) in which the illumination devices arranged at even intervals are centered and regarding the rectangles as the illumination ranges.

On the other hand, in a case where the sizes of both the audio-visual environment spaces are not conformed to one another, as shown in Fig. 23, the size of the actual audio-visual environment space indicated by the audio-visual environment data is converted so as to conform to the size of the virtual audio-visual environment space indicated by the audio-visual environment reference data (step 5). A conversion method for conforming the sizes (areas) of both the audio-visual environment spaces is, more specifically, that magnification ratios are changed in a lengthwise direction (y direction) and a crosswise direction (x direction), respectively, in the actual audio-visual environment space, so as to conform to the size of the virtual audio-visual environment space indicated by the audio-visual environment reference data.

Further, after conforming the sizes of both the audio-visual environment spaces to one another, illumination range of each illumination device provided in the virtual audio-visual environment space indicated by the audio-visual environment reference data is calculated (step 4), and illumination range of each illumination device provided in the actual audio-visual environment space is calculated (step 6).

Next, based on the calculated illumination range of each illumination device provided in the virtual audio-visual environment space and illumination range of each illumination device provided in the actual audio-visual environment space, illumination control data corresponding to the illumination device provided in the virtual audio-visual environment space is converted into illumination control data corresponding to the illumination device installed in the actual audio-visual environment space (step 7).

Fig. 24 is a view for explaining a conversion operation of illumination control data. Here, the explanation is made with reference to an illumination device v1" which is one of the illumination devices installed in the actual audio-visual environment space. First, a virtual audio-visual environment space shown in Fig. 24 (a) and an actual audio-visual environment space shown in Fig. 24(b) are overlapped. The actual audio-visual environment space is obtained by being converted so as to conform to the virtual audio-visual environment space in size. In the example, the illumination ranges of the illumination devices installed in the actual audio-visual environment space are larger than those in the virtual audio-visual environment space. Accordingly, the illumination range of the illumination device v1" is to include illumination ranges of the illumination devices v1, v2, v5 and v6 provided in the virtual audio-visual environment space.

The illumination range of the illumination device v1" includes illumination ranges of the illumination devices v1, v2, v5, and v6 provided in the virtual audio-visual environment space. Moreover, component ratios of the illumination devices are, v1 : v2 : v5 : v6 = 9 : 3 : 3 : 1. According to the component rations, a weighting operation is performed on illumination control data corresponding to the illumination devices v1, v2, v5, and v6 provided in the virtual audio-visual environment space, whereby illumination control data corresponding to the illumination device v1" can be obtained.

More specifically, assuming that illumination control data corresponding to the illumination devices v1, v2, v5, and v6 provided in the virtual audio-visual environment space are (R1, G1, B1), (R2, G2, B2), (R5, G5, B5), and (R6, G6, B6), respectively, the illumination control data corresponding to the illumination device v1" can be obtained by steps of: multiplying each of the illumination control data by the component ratios (9 : 3 : 3 : 1); adding thus multiplied values together; and dividing thus added value by a total of the component ratios (the total is, 9 + 3 + 3 + 1 = 16). For example, the illumination control data for controlling the red light source (R) corresponding to the illumination device v1" can be obtained by: 9R1+ 3R2 + 3R5 + R6 / 16. The green light source (G) and the blue light source (B) can be obtained in similar ways.

Illumination control data for controlling all illumination devices installed in the actual audio-visual environment space can be obtained by performing the above described operation on the other illumination devices v2", v3", v4", v5", v6", v7", v8", and v9" in the actual audio-visual environment space. Further, as described above, the externally obtained illumination control data is attached to image data in each frame. Accordingly, appropriate illumination control data corresponding to images to be displayed on the display screen can be obtained by also repeatedly performing the illumination control data conversion process in each frame.

That is, the illumination control data converting section 9 calculates virtual divided regions and actual divided regions. The virtual divided regions are produced by dividing a wall surface, (i) which surrounds the virtual audio-visual environment space indicated by the audio-visual environment reference data and (ii) on which a plurality of illumination devices are provided, into a plurality of regions each of which includes one of the illumination devices. The actual divided regions are generated by dividing a wall surface (i) which surrounds the actual audio-visual environment space indicated by the audio-visual environment data and (ii) on which a plurality of illumination devices are provided, into a plurality of regions each of which includes one of the illumination devices. Further, the illumination control data converting section 9: fits thus calculated virtual divided regions and actual divided regions together; performs a weighting operation on illumination control data for controlling the illumination devices included in the virtual divided regions based on an area ratio of at least one virtual divided region included in a certain actual divided region; and calculates illumination control data for controlling the illumination devices included in the actual divided regions with use of the weighted illumination control data.

### <Second Embodiment>

The following explains a second embodiment of the present invention. The first embodiment is a system in which (i) audio-visual environment reference data relating to a position of at least one illumination device in a virtual audio-visual environment space and (ii) illumination control data for controlling each of the at least one illumination device in the virtual audio-visual environment space are attached to image data to be sent. On the other hand, the second embodiment of the present invention is a system in which, although illumination control data for controlling at least one illumination device in a virtual audio-visual environment space is attached to image data, audio-visual environment reference data relating to each position of the at least one illumination device in the virtual audio-visual environment space is not attached to the image data but is obtained from an external device (e.g., such as a server device) via the Internet or the like. In the following explanation for the second embodiment of the present invention, the same reference signs are applied to the same sections as the first embodiment, and the overlapping explanations are omitted.

Fig. 25 is a block diagram showing a schematic structure of an image transmission device in the second embodiment of the present invention. An image transmission device 21 includes a data multiplexing section 22 and a sending section 23. The data multiplexing section 22 multiplexes image data, sound data, and illumination control data. The sending section 23 sends the multiplexed data at the data multiplexing section 22 as broadcasting data.

Fig. 26 is a block diagram showing a schematic structure of an image receiving device (audio-visual environment control device) in the second embodiment of the present invention. An audio-visual environment control device 24 shown in Fig. 26 is provided with a first receiving section 25, a data separating section 26, a sending section 27, a second receiving section 28, and a CPU (Central Processing Unit) 29. The first receiving section 25 receives broadcasting data. By the data separating section 26, the broadcasting data received at the first receiving section 25 is separated into image data, sound data, and illumination control data. The sending section 27 sends a request to send audio-visual environment reference data to an external server device via the Internet or the like. The second receiving section 28 receives the audio-visual environment reference data sent from the external server device. The CPU 29 issues a command to the sending section 27 for sending the audio-visual environment reference data and obtains the audio-visual environment reference data received at the receiving section 28.

Based on a user's instruction or the like, the CPU 29 sends to the external device via the sending section 27 the request to send audio-visual environment reference data for a program content to which image data to be displayed by an image display device 7 belongs. That is, the CPU 29 sends to the external device via the sending section 27 the request to send audio-visual environment reference data corresponding to the illumination control data separated at the separation section 26.

A timing at which the CPU sends the request to send the audio-visual environment reference data is not limited in particular. For example, the timing is a time when the first receiving section 25 receives the broadcasting data.

Note that, the program content is a collective of information including at least the image data, and in general, including sound data other than the image data. In other words, the program content is a collective of image data and sound data corresponding to the image data.

Here, the external server device (data transmission device) is explained with reference to Fig. 27. An external server device 31 is provided with a receiving section 32, a data storing section 33, and a sending section 34. The receiving section 32 receives a request sent from the image receiving device (audio-visual environment control device) 21. The data storing section 33 stores, per program content, audio-visual environment reference data relating to a position of at least one illumination device in a virtual audio-visual environment space. The sending section 34 sends reference data corresponding to the request to send from the audio-visual environment control device 21 to a source of the request (i.e., the audio-visual environment control device 21).

The external server device 31: receives the request to send the audio-visual environment reference data from the image receiving device 21; reads out from the data storing section 33 the reference data for the requested program content; and sends the reference data to the source of the request to send, that is, to the image receiving device 21.

The audio-visual environment reference data sent from the external server device 31 is received at the second receiving section 28 of the image receiving device 21, and then sent to the illumination control data converting section 9 via the CPU 29. Further, at the illumination control data converting section 9, illumination control data obtained by separating from the broadcasting data is converted into illumination control data for controlling at least one illumination device 11 in an actual audio-visual environment space, with use of (i) audio-visual environment data, which is stored in an audio-visual environment data storing section 10, relating to each installation position of the at least one illumination device in the actual audio-visual environment space, and (ii) the audio-visual environment reference data sent from the external server device 31. Then, the converted data is outputted to the illumination devices 11. Note that a method for converting the illumination control data at the illumination control data converting section 9 is the same as the first embodiment, therefore the explanation thereof is omitted here.

As described above, in the present embodiment, even in a case where only the illumination control data is attached to the image data, the audio-visual environment reference data corresponding to the illumination control data is obtained from the external device, whereby the illumination control data corresponding to the illumination device installed in the actual audio-visual environment space can be obtained. This allows consistently appropriate illumination control.

Moreover, the audio-visual environment reference data is constant such as for each program unit, thereby unnecessary to be sent in each frame. Accordingly, the audio-visual environment reference data may be sent from the external device, and only the illumination control data is attached to the image data to be sent as in the present embodiment. This makes it possible to reduce a data amount of broadcasting data as much as a data amount of the audio-visual environment reference data. Moreover, the illumination control data is generated by a producer of the program content and then sent. That is, illumination control intended by the producer of the program content can be performed by adding the illumination control data to image data to be sent.

### <Third Embodiment>

The following explains a third embodiment of the present invention. The second embodiment is a system in which illumination control data for controlling at least one illumination device in a virtual audio-visual environment space is attached to image data, and audio-visual environment reference data relating to each position of the at least one illumination device in the virtual audio-visual environment space is not attached to the image data but obtained from such as an external server device via the Internet or the like. On the other hand, the third embodiment of the present invention is a system in which both illumination control data and audio-visual environment reference data are obtained from such as an external server device via the Internet or the like. In the following explanation for the third embodiment of the present invention, the same reference signs are applied to the same sections as the first and second embodiments, and the explanations thereof are not repeated here.

An image transmission device in the third embodiment of the present invention is a device which multiplexes image data and sound data, and sends thus multiplexed data. This device operates as a conventional transmission device for transmitting broadcasting data.

Fig. 28 is a block diagram showing a schematic structure of an image receiving device (audio-visual environment control device) in the third embodiment of the present invention. An image receiving device 44 shown in Fig. 28 is different from the image receiving device 24 in the second embodiment in that a CPU 49 issues a request to send both audio-visual environment reference data and illumination control data via a sending section 47, and obtains the audio-visual environment reference data and the illumination control data via a receiving section 48.

Based on a user's instruction or the like, the CPU 49 sends to an external device via the sending section 47 a request to send (i) illumination control data and (ii) audio-visual environment reference data for a program content of image data to be displayed by an image display device 7.

A timing at which the CPU 49 sends the request to send the audio-visual environment reference data and the illumination control data corresponding to the audio-visual environment reference data is not limited in particular. For example, the timing is a time when the first receiving section 45 receives the broadcasting data.

Here, the external server device (data transmission device) is explained with reference to Fig. 29. An external server device 51 is provided with a receiving section 52, a data storing section 53, and a sending section 54. The receiving section 52 receives a request sent from the image receiving device (audio-visual environment control device) 44. The data storing section 53 stores, per program content, audio-visual environment reference data relating to a position of at least one illumination device in a virtual audio-visual environment space, and illumination control data for controlling each of the at least one illumination device in the virtual audio-visual environment space. The sending section 54 sends the reference data and the illumination control data, in response to the request to send from the audio-visual environment control device 44, to a source of the request (i.e., the audio-visual environment control device 44).

The external server device 51: receives the request to send the audio-visual environment reference data and illumination control data from the image receiving device 44; reads out the requested illumination control data and audio-visual environment reference data for the program content from the data storing section 53; and sends the data to the source of the request to send, that is, the image receiving device 44.

The audio-visual environment reference data sent from the external server device 51 is sent to an illumination control data converting section 9 via the CPU 49. On the other hand, the illumination control data sent from the external server device 51 is temporarily kept in the CPU 49. Then, the CPU 49 sends illumination control data corresponding to TC (Time Code) of image data separated at a data separating section 6 to the illumination control data converting section 9. That is, the illumination control data sent from the external server device 51 is described to be associated with TC (Timing Code) of the image data in each frame so as to be outputted in synchronization with an output timing of the image data.

Further, at the illumination control data converting section 9, the illumination control data obtained from the external server device 51 is converted into illumination control data for controlling at least one illumination device 11 installed in an actual audio-visual environment space, with use of (i) audio-visual environment data, which is stored in an audio-visual environment data storing section 10, relating to each installation position of the at least one illumination device in the actual audio-visual environment space, and (ii) the audio-visual environment reference data sent from the external server device 51. Then, the converted data is outputted to the illumination devices 11. Note that a method for converting the illumination control data at the illumination control data converting section 9 is the same as the first embodiment, therefore the explanation thereof is omitted here.

As described above, in the present embodiment, even in a case where such as illumination control data is not attached to image data, illumination control data according to the image data, and audio-visual environment reference data corresponding to the illumination control data are obtained from an external device, whereby illumination control data corresponding to illumination devices installed in an actual audio-visual environment space can be obtained. This allows consistently appropriate illumination control.

Moreover, in the present embodiment, both the illumination control data and the audio-visual environment reference data are sent from the external device. This reduces data amount of broadcasting data less than that of the second embodiment, and also reduces loads of a program content producer. Further, such a system in the present embodiment can provide services according to a user's decision whether the illumination control is necessary or not.

Note that, in the above explanation, the program content is not limited to contents of television programs sent by television broadcasting, but may be contents of works stored in media such as DVDs. That is, the present invention can be applied not only to a case where input image data is obtained by receiving television broadcasting, but also to a case where image data reproduced by an external reproduction device is inputted.

The present invention is not limited to the description of the embodiments above, but may be altered by a skilled person within the scope of the claims. An embodiment based on a proper combination of technical means disclosed in different embodiments is encompassed in the technical scope of the present invention.

Moreover, each block of the image receiving devices 4, 24, and 44, in particular, the illumination control data converting section 9 may be composed of hardware logic, or may be performed by software with use of a CPU as follows.

That is, the image receiving devices 4, 24, and 44 include: a CPU (Central Processing Unit) for issuing a command of a control program for operating each function; a ROM (Read Only Memory) for storing the program; a RAM (Random Access Memory) for running the program; a memory device (memory medium) such as a memory for storing the program and various data; and the like.

Further, the objects of the present invention can be attained by: providing the image receiving devices 4, 24, and 44 with a memory medium in which program codes of a control program (audio-visual environment control program) for each of the image receiving devices 4, 24, and 44 are computer-readably stored; and performing read-out of the program codes stored in the memory medium by the computer (or a CPU or a MPU). The program codes encompass that executable format program, intermediate code program, and source program, that is, the above described software for performing the function.

The memory medium may be, for example: a tape type such as a magnetic tape or a cassette tape; a disk type encompassing a magnetic disk such as a floppy disk (registered trademark) / a hard disk, or an optical disk such as a CD-ROM / a MO / a MD / a DVD / a CD-R; a card type such as an IC card (encompassing a memory card) / an optical card; or a semiconductor memory type such as a mask ROM / an EPROM / an EEPROM / a flash ROM.

Moreover, the image receiving devices 4, 24, and 44 may be composed so as to connect to a communication network thereby sending the program codes via the communication network. The communication network is not particularly limited, and may be, for example: the Internet; an intranet; an extranet; a LAN; an ISDN; a VAN; a CATV communication network; a virtual private network; a telephone communication network; a mobile communication network; a satellite communication network; or the like. Moreover, a transmission media included in the communication network is not particularly limited, and may be, for example: a wired type such as an IEEE1394, a USB, a power-line carrier, a cable TV line, a telephone line, a ADSL line, or the like; or a wireless type such as infrared-ray of IrDA or a remote controller, a Bluetooth (registered trademark), a Wi-Fi, a HDR, a mobile phone network, a satellite network, a terrestrial digital network, or the like. Note that, the present invention would possibly be achieved as a configuration of a computer data signal embedded in a carrier wave, in which the program codes are realized in electronic transmission.

## Claims

1. A data transmission device (1), comprising:
sending means (3) configured to send (i) reference data relating to a relative position of an illumination device in a virtual audio-visual environment space, (ii) illumination control data for controlling the illumination device in the virtual audio-visual environment space and (iii) image data data corresponding to the reference data and the illumination control data, wherein
the data transmission device being configured to attach the reference data and the illumination control data to the image data,
the reference data indicates a relative position of the illumination device based on a coordinate system defined in the virtual audio-visual environment space,
the illumination control data controlling the illumination device that corresponds to the reference data, in accordance with the image data, and
the illumination control data is information for controlling the illumination device in a the virtual audio-visual environment space, and is information for performing illumination control in response to an image displayed in the virtual audio-visual environmental space.

2. The data transmission device (1) as set forth in claim 1, wherein:
the reference data indicates a relative position (v₁(x₁, y₁, z₁), ...v₈(x₈, y_{8,} z₈))of the illumination device in the virtual audio-visual environment space with respect to an image display device (101) in the virtual audio-visual environment space.

3. An audio-visual environment control device (4) comprising:
receiving means (5) for receiving reference data, illumination control data, and image data corresponding to the reference data and the illumination control data, the reference data relating to an illumination device in a virtual audio-visual environment space, and the illumination control data being used for controlling the illumination device in the virtual audio-visual environment space;
storing means (10) for storing audio-visual environment data relating to an installation position (v₁,...,v₇) of the illumination device in an actual audio-visual environment space; and
illumination control data converting means (9) for converting the illumination control data received at the receiving means (5), into illumination control data for controlling the illumination device in the actual audio-visual environment space, the illumination control data converting means (9) performing the conversion based on the audio-visual environment data stored in the storing means and the reference data received at the receiving means (5), wherein
the reference data indicates a relative position (v₁(x₁, y₁, z₁), ...v₈(x_{8,} y₈, z₈)) of the illumination device based on a coordinate system defined in the virtual audio-visual environment space,
the illumination control data controlling the illumination device that corresponds to the reference data, in accordance with the image data, and
the illumination control data is information for controlling the illumination device in a the virtual audio-visual environment space, and is information for performing illumination control in response to an image displayed in the virtual audio-visual environmental space.

4. An audio-visual environment control system comprising:
an audio-visual environment control device (4) as set forth in claim 3;
an image display device (201) for displaying the image data; and
an illumination device installed around the image display device (201).

5. The audio-visual environment control system as set forth in claim 4, wherein:
the audio-visual environment data indicates a relative position of the illumination device in the actual audio-visual environment space with respect to the image display device (201) in the actual audio-visual environment space.

## Patentansprüche

1. Datenübertragungseinrichtung (1),
mit:
einer Sendeeinrichtung (3), die ausgebildet ist,
(i) Referenzdaten in Bezug auf eine Relativposition einer Beleuchtungseinrichtung in einem virtuellen audiovisuellen Umgebungsraum,
(ii) Beleuchtungssteuerdaten zum Steuern der Beleuchtungseinrichtung im virtuellen audiovisuellen Umgebungsraum und
(iii) Bilddaten korrespondierend zu den Referenzdaten und den Beleuchtungssteuerdaten,
zu senden
wobei:
die Datenübertragungseinrichtung ausgebildet ist, die Referenzdaten und die Beleuchtungssteuerdaten an die Bilddaten anzuhängen,
die Referenzdaten eine Relativposition der Beleuchtungseinrichtung auf der Grundlage eines Koordinatensystems anzeigen, welches im virtuellen audiovisuellen Umgebungsraum definiert ist,
die Beleuchtungssteuerdaten, welche die Beleuchtungseinrichtung steuern, zu den Referenzdaten gemäß den Bilddaten korrespondieren und
die Beleuchtungssteuerdaten aus Information zum Steuern der Beleuchtungseinrichtung im virtuellen audiovisuellen Umgebungsraum und aus Information zum Ausführen einer Beleuchtungssteuerung in Antwort auf ein im virtuellen audiovisuellen Umgebungsraum angezeigtes Bild bestehen.

2. Datenübertragungseinrichtung (1) nach Anspruch 1,
wobei die Referenzdaten eine Relativposition (v₁(x₁, y₁, z₁), v₈(x₈, y₈, z₈) der Beleuchtungseinrichtung im virtuellen audiovisuellen Umgebungsraum in Bezug auf eine Bildanzeigeeinrichtung (101) im virtuellen audiovisuellen Umgebungsraum anzeigen.

3. Steuereinrichtung (4) für eine audiovisuelle Umgebung,
mit:
einer Empfangseinrichtung (5) zum Empfangen von Referenzdaten, Beleuchtungssteuerdaten und Bilddaten, welche zu den Referenzdaten und den Beleuchtungssteuerdaten korrespondieren,
wobei sich die Referenzdaten auf eine Beleuchtungseinrichtung in einem virtuellen audiovisuellen Umgebungsraum beziehen und
wobei die Beleuchtungssteuerdaten zum Steuern der Beleuchtungseinrichtung im virtuellen audiovisuellen Umgebungsraum verwendet werden,
einer Speichereinrichtung (10) zum Speichern audiovisueller Umgebungsdaten in Bezug auf eine Installationsposition (v₁, ..., v₇) der Beleuchtungseinrichtung in einem tatsächlichen audiovisuellen Umgebungsraum und
einer Beleuchtungssteuerdatenwandeleinrichtung (9) zum Wandeln von der Empfangseinrichtung (5) empfangener Beleuchtungssteuerdaten in Beleuchtungssteuerdaten zum Steuern der Beleuchtungseinrichtung im tatsächlichen audiovisuellen Umgebungsraum, wobei die Beleuchtungssteuerdatenwandeleinrichtung (9) die Wandlung auf der Grundlage der audiovisuellen Umgebungsdaten, die in der Speichereinrichtung gespeichert sind, und der Referenzdaten, die von der Empfangseinrichtung (5) empfangen werden, ausführt,
wobei:
die Referenzdaten eine Relativposition (v₁(x₁, y₁, z₁), ... , v₈(x₈, y₈, z₈) der Beleuchtungseinrichtung auf der Grundlage eines Koordinatensystems anzeigen, welches im virtuellen audiovisuellen Umgebungsraum definiert ist,
die Beleuchtungssteuerdaten, welche die Beleuchtungseinrichtung steuern, zu den Referenzdaten gemäß den Bilddaten korrespondieren und
die Beleuchtungssteuerdaten aus Information zum Steuern der Beleuchtungseinrichtung in einem virtuellen audiovisuellen Umgebungsraum und aus Information zum Ausführen einer Beleuchtungssteuerung in Antwort auf ein im virtuellen audiovisuellen Umgebungsraum angezeigtes Bild bestehen.

4. Steuersystem für eine audiovisuelle Umgebung,
mit:
einer Steuereinrichtung (4) für eine audiovisuelle Umgebung nach Anspruch 3,
einer Bildanzeigeeinrichtung (201) zum Anzeigen der Bilddaten und
einer Beleuchtungseinrichtung, die um die Bildanzeigeeinrichtung (201) herum angebracht ist.

5. Steuersystem für eine audiovisuelle Umgebung nach Anspruch 4,
wobei die audiovisuellen Umgebungsdaten eine Relativposition der Beleuchtungseinrichtung im tatsächlichen audiovisuellen Umgebungsraum in Bezug auf die Bildanzeigeeinrichtung (201) im tatsächlichen audiovisuellen Umgebungsraum anzeigen.

## Revendications

1. Dispositif de transmission de données (1) comprenant :
des moyens d'envoi (3) configurés pour envoyer (i) des données de référence concernant une position relative d'un dispositif d'éclairage dans un espace d'environnement audiovisuel virtuel, (ii) des données de commande d'éclairage pour commander le dispositif d'éclairage dans l'espace d'environnement audiovisuel virtuel et (iii) des données d'image correspondant aux données de référence et aux données de commande d'éclairage, dans lequel
le dispositif de transmission de données est configuré pour joindre les données de référence et les données de commande d'éclairage aux données d'image,
les données de référence indiquent une position relative du dispositif d'éclairage sur la base d'un système de coordonnées défini dans l'espace d'environnement audiovisuel virtuel,
les données de commande d'éclairage commandent le dispositif d'éclairage qui correspond aux données de référence, conformément aux données d'image, et
les données de commande d'éclairage sont des informations pour commander le dispositif d'éclairage dans un espace d'environnement audiovisuel virtuel, et sont des informations pour mettre en oeuvre une commande d'éclairage en réponse à une image affichée dans l'espace d'environnement audiovisuel virtuel.

2. Dispositif de transmission de données (1) conformément à la revendication 1, dans lequel :
les données de référence indiquent une position relative (v₁(x₁, y₁, z₁)....v₈(x₈, y₈, z₈)) du dispositif d'éclairage dans l'espace d'environnement audiovisuel virtuel relativement à un dispositif d'affichage d'image (101) dans l'espace d'environnement audiovisuel virtuel.

3. Dispositif de commande d'environnement audiovisuel (4) comprenant :
des moyens de réception (5) pour recevoir des données de référence, des données de commande d'éclairage et des données d'image correspondant aux données de référence et aux données de commande d'éclairage, les données de référence concernant un dispositif d'éclairage dans un espace d'environnement audiovisuel virtuel, et les données de commande d'éclairage étant utilisées pour commander le dispositif d'éclairage dans l'espace d'environnement audiovisuel virtuel ;
des moyens de stockage (10) pour stocker des données d'environnement audiovisuel concernant une position d'installation (v₁.....v₇) du dispositif d'éclairage dans un espace d'environnement audiovisuel réel et
des moyens de conversion de données de commande d'éclairage (9) pour convertir les données de commande d'éclairage reçues au niveau des moyens de réception (5) en des données de commande d'éclairage pour commander le dispositif d'éclairage dans l'espace d'environnement audiovisuel réel, les moyens de conversion de données de commande d'éclairage (9) effectuant la conversion sur la base des données d'environnement audiovisuel stockées dans les moyens de stockage et des données de référence reçues au niveau des moyens de réception (5), dans lequel,
les données de référence indiquent une position relative (v₁(x₁, y₁, z₁) .... v₈(x₈, y₈, z₈)) du dispositif d'éclairage sur la base d'un système de coordonnées défini dans l'espace d'environnement audiovisuel virtuel,
les données de commande d'éclairage commandent le dispositif d'éclairage qui correspondent aux données de référence, conformément aux données d'image, et
les données de commande d'éclairage sont des informations pour commander le dispositif d'éclairage dans un espace d'environnement audiovisuel virtuel, et sont des informations pour mettre en oeuvre une commande d'éclairage en réponse à une image affichée dans l'espace d'environnement audiovisuel virtuel.

4. Système de commande d'environnement audiovisuel comprenant :
un dispositif de commande d'environnement audiovisuel (4) conformément à la revendication 3 ;
un dispositif d'affichage d'image (201) pour afficher les données d'image ; et
un dispositif d'éclairage installé autour du dispositif d'affichage d'image (201).

5. Système de commande d'environnement audiovisuel conformément à la revendication 4, dans lequel :
les données d'environnement audiovisuel indiquent une position relative du dispositif d'éclairage dans l'espace d'environnement audiovisuel réel relativement au dispositif d'affichage d'image (201) dans l'espace d'environnement audiovisuel réel.
